# EUROPEAN PATENT APPLICATION

(11) **EP 4 668 625 A1**
(43) Date of publication of application: **24.12.2025**
(21) Application number: 24814138.4
(22) Date of filing: 09.05.2024
(51) Int. Cl.: H04L 1/00, H04L 5/00

(54) **CAPABILITY INDICATION METHOD AND APPARATUS, AND CAPABILITY DETERMINATION METHOD AND APPARATUS IN WIRELESS LOCAL AREA NETWORK**

(30) Priority: 29.05.2023 CN 202310621928
(71) Applicant: Huawei Technologies Co., Ltd., Shenzhen, Guangdong 518129 (CN)
(72) Inventor: HU, Mengshi, Shenzhen, Guangdong 518129 (CN); YU, Jian, Shenzhen, Guangdong 518129 (CN); GAN, Ming, Shenzhen, Guangdong 518129 (CN)
(74) Representative: Gill Jennings & Every LLP
(86) International application number: PCT/CN2024/092060
(87) International publication number: WO 2024/244937

(57) **Abstract**

This application discloses a capability indication method and a capability determining method in a wireless local area network, and an apparatus. The capability indication method includes: A first device determines capability information, and sends the capability information to a second device. The capability information includes a nominal packet padding subfield, and the nominal packet padding subfield indicates a corresponding nominal packet padding value used when the second device sends a physical layer data packet to the first device. The nominal packet padding value is for all NSSs and all RU allocations that the first device supports, and for at least two modulation schemes used by the second device on a configured frequency domain resource or a configured spatial stream. When the second device sends the PPDU to the first device by using the at least two modulation schemes, according to the method, the nominal packet padding value determined by the second device enables the first device to have enough time to process the PPDU received from the second device.

## Description

### CROSS-REFERENCE TO RELATED APPLICATIONS

This application claims priority to Chinese Patent Application No. 202310621928.0, filed with the China National Intellectual Property Administration on May 29, 2023 and entitled "CAPABILITY INDICATION METHOD AND CAPABILITY DETERMINING METHOD IN WIRELESS LOCAL AREA NETWORK, AND APPARATUS", which is incorporated herein by reference in its entirety.

### TECHNICAL FIELD

This application relates to the field of wireless local area network technologies, and in particular, to a capability indication method and a capability determining method in a wireless local area network, and an apparatus.

### BACKGROUND

To ensure that a receiver has enough processing time to process a physical layer protocol data unit (physical protocol data unit, PPDU) sent by a transmitter, the receiver may indicate a nominal packet padding value to the transmitter. Therefore, the transmitter determines, based on the nominal packet padding value, duration of a packet extension (packet extension, PE) field included in the PPDU. The receiver does not need data in the packet extension. Therefore, other data may be processed within processing time of the packet extension, to ensure that the receiver has enough processing time to process the received PPDU.

The transmitter uses one or more modulation schemes, and minimum processing time (or corresponding nominal packet padding values) required by the receiver varies accordingly. Currently, for an indication of a nominal packet padding value by the receiver, the transmitter sends a physical layer data packet to the receiver by using one modulation scheme by default. For a case in which a plurality of modulation schemes are supported, there is no corresponding solution for indicating a nominal packet padding value.

### SUMMARY

This application provides a capability indication method and a capability determining method in a wireless local area network, and an apparatus, to indicate a corresponding nominal packet padding value used when a receiver supports a transmitter in sending a physical layer data packet to the receiver by using at least two modulation schemes.

To achieve the foregoing objective, embodiments of this application provide four capability indication methods in a wireless local area network, and correspondingly, there are four capability determining methods in the wireless local area network.

Any capability indication method in the wireless local area network may be performed by a first communication apparatus. The first communication apparatus may be a communication device or a communication apparatus, for example, a chip system, that can support a communication device in implementing a function required by the method. The first communication apparatus may be a receive end in two communication ends. For example, the two communication ends include a first device and a second device, the first device is a receive end, and the second device is a transmit end. The first communication apparatus may be a unit, a functional module, or the like in the first device. For example, the first communication apparatus may be a chip disposed in the first device, or the first communication apparatus is another component configured to implement a function of the first device. Correspondingly, the capability determining method in the wireless local area network may be performed by a second communication apparatus. The second communication apparatus may be a communication device or a communication apparatus, for example, a chip system, that can support a communication device in implementing a function required by the method. The second communication apparatus may be a transmit end in two communication ends. For example, the two communication ends include a first device and a second device, the first device is a receive end, and the second device is a transmit end. The second communication apparatus may be a unit, a functional module, or the like in the second device. For example, the second communication apparatus may be a chip disposed in the second device, or the second communication apparatus is another component configured to implement a function of the second device.

For ease of description, the following describes the capability indication method in the wireless local area network by using an example in which the first communication apparatus is the first device, and describes the capability determining method in the wireless local area network by using an example in which the second communication apparatus is the second device.

According to a first aspect, an embodiment of this application provides a first capability indication method in a wireless local area network. The capability indication method includes: A first device determines capability information, and sends the capability information to a second device. The capability information includes a nominal packet padding subfield, the nominal packet padding subfield indicates a corresponding nominal packet padding value used when the second device sends a PPDU to the first device, to enable the second device to determine, based on the nominal packet padding value, duration of a PE field included in the PPDU. The duration of the PE field enables the first device to have enough time to parse the PPDU received from the second device. The nominal packet padding value is for all numbers of spatial streams (number of spatial streams, NSS) and all resource unit (resource unit, RU) allocations that the first device supports, and for at least two modulation schemes used by the second device on a configured frequency domain resource or a configured spatial stream.

In the method, the nominal packet padding value indicated by the nominal packet padding subfield is for all NSSs and all RU allocations that the first device supports, and further for the at least two modulation schemes used by the second device on the configured frequency domain resource or the configured spatial stream. When the second device sends the PPDU to the first device by using the at least two modulation schemes, according to the method, the nominal packet padding value determined by the second device enables the first device to have enough time to process the PPDU received from the second device.

According to a second aspect, an embodiment of this application provides a first capability determining method in a wireless local area network. The capability determining method includes: A second device receives capability information from a first device, determines a nominal packet padding value based on a configured frequency domain resource and spatial stream and at least two used modulation schemes, and determines, based on the nominal packet padding value, duration of a PE field included in a PPDU sent to the first device. The duration of the PE field enables the first device to have enough time to parse the PPDU received from the second device. The capability information includes a nominal packet padding subfield, and the nominal packet padding subfield indicates the corresponding nominal packet padding value used when the second device sends the PPDU to the first device. The nominal packet padding value is for all NSSs and all RU allocations that the first device supports, and for at least two modulation schemes used by the second device on the configured frequency domain resource or the configured spatial stream.

This corresponds to the solution provided in the first aspect. The nominal packet padding value indicated by the nominal packet padding subfield is for a case in which the second device uses the at least two modulation schemes. When the second device sends the PPDU to the first device by using the at least two modulation schemes, the nominal packet padding value may be determined based on the nominal packet padding subfield from the first device, and the duration of the PE field included in the PPDU is further determined, to enable the first device to have enough time to parse the PPDU received from the second device.

Optionally, the capability information further includes a physical layer packet extension thresholds present subfield, the nominal packet padding subfield indicates the corresponding nominal packet padding value used when the second device sends the PPDU to the first device, and a value of the physical layer packet extension thresholds present subfield is 0.

In a possible implementation, the nominal packet padding value corresponding to the at least two modulation schemes used by the second device is increased by one or more levels based on a nominal packet padding value corresponding to one modulation scheme used by the second device. For example, for all RU allocations and all NSSs, a status value of the nominal packet padding subfield is 0, and the nominal packet padding value is 8 microseconds; a status value of the nominal packet padding subfield is 1, and the nominal packet padding value is 16 microseconds; a status value of the nominal packet padding subfield is 2, and the nominal packet padding value is 20 microseconds; or a status value of the nominal packet padding subfield is 3, the second device sends the PPDU to the first device by using the at least two modulation schemes, and the nominal packet padding value is 20 microseconds.

In a possible implementation, that the second device determines the nominal packet padding value based on the configured frequency domain resource and spatial stream and the at least two used modulation schemes includes: The second device determines the nominal packet padding value based on a configured number of spatial streams, the configured frequency domain resource, and a highest-order modulation scheme in the at least two modulation schemes. In other words, when the second device uses the at least two modulation schemes, the second device may determine the nominal packet padding value based on the highest-order modulation scheme in the at least two modulation schemes by default.

In a possible implementation, when a status value of the nominal packet padding subfield is 3, a constellation index corresponding to the highest-order modulation scheme in the at least two modulation schemes is less than or equal to a constellation index threshold, and one or more of the following conditions are met, the nominal packet padding value is 16 microseconds; otherwise, the nominal packet padding value is 20 microseconds: an RU/MRU allocation size is less than or equal to a size threshold, a size of an RU or an MRU corresponding to the highest-order modulation scheme is less than or equal to a size threshold, or an NSS is less than or equal to a number of spatial streams threshold.

In this solution, the nominal packet padding value is related to a size of an RU/MRU and an NSS that are actually configured for the second device and the highest-order modulation scheme. The duration of the PE field determined based on the nominal packet padding value determined based on the size of the RU/MRU and the NSS that are actually configured for the second device and the highest-order modulation scheme enables the first device to have enough time to parse the received PPDU, and can reduce processing complexity of the second device.

Optionally, the constellation index threshold is 5, the size threshold is 2×996-tone, and the threshold of a number of spatial streams is 8 or 16.

According to a third aspect, an embodiment of this application provides a second capability indication method in a wireless local area network. The capability indication method includes: A first device determines capability information, and sends the capability information to a second device. The capability information includes a physical layer packet extension thresholds field, and the physical layer packet extension thresholds field includes an RU index bitmask subfield, an NSS subfield, and a physical layer packet extension thresholds information field. The physical layer packet extension thresholds information field includes a plurality of sets of packet extension thresholds subfields corresponding to different nominal packet padding values. Each set of packet extension thresholds subfields indicates a modulation threshold corresponding to an NSS being n and an RU/MRU corresponding to a sequential number b, and the modulation threshold is used by the second device to determine a nominal packet padding value used to send a PPDU to the first device. The nominal packet padding value is for the first device supporting the second device in using at least two modulation schemes when the configured NSS is n and the RU/MRU corresponds to the sequential number b. A value range of n is a subset of [N1, ..., N2], and both N1 and N2 are integers greater than or equal to 1. A value range of b is a subset of [M1, ..., M2], and both M1 and M2 are integers greater than or equal to 0.

In the method, the nominal packet padding value corresponding to the modulation threshold indicated by each set of packet extension thresholds subfields is for a case in which the first device supports the second device in using at least two modulation schemes on a configured frequency domain resource or a configured spatial stream. When the second device uses the at least two modulation schemes, according to the method, the corresponding nominal packet padding value enables the first device to have enough time to parse a PPDU received from the second device.

According to a fourth aspect, an embodiment of this application provides a second capability determining method in a wireless local area network. The capability determining method includes: A second device receives capability information from a first device, determines a nominal packet padding value based on a configured frequency domain resource and spatial stream and at least two used modulation schemes, and determines, based on the nominal packet padding value, duration of a PE field included in a PPDU that is sent by the second device to the first device. The duration of the PE field enables the first device to have enough time to parse the PPDU received from the second device. The capability information includes a physical layer packet extension thresholds field, and the physical layer packet extension thresholds field includes an RU index bitmask subfield, an NSS subfield, and a physical layer packet extension thresholds information field. The physical layer packet extension thresholds information field includes a plurality of sets of packet extension thresholds subfields corresponding to different nominal packet padding values. Each set of packet extension thresholds subfields indicates a modulation threshold corresponding to an NSS being n and an RU/MRU corresponding to a sequential number b, and the modulation threshold is used by the second device to determine the nominal packet padding value used to send the PPDU to the first device. The nominal packet padding value is for the first device supporting the second device in using the at least two modulation schemes when the configured NSS is n and the RU/MRU corresponds to the sequential number b. A value range of n is a subset of [N1, ..., N2], and both N1 and N2 are integers greater than or equal to 1. A value range of b is a subset of [M1, ..., M2], and both M1 and M2 are integers greater than or equal to 0.

This corresponds to the solution provided in the third aspect. When the second device sends the PPDU to the first device by using the at least two modulation schemes, the second device may determine the nominal packet padding value based on the configured RU/MRU corresponding to the sequential number b, the configured NSS, the at least two used modulation schemes, and the plurality of sets of packet extension thresholds subfields corresponding to the plurality of nominal packet padding values. According to the method, the first device can have enough time to parse the PPDU received from the second device.

Optionally, the capability information further includes a physical layer packet extension thresholds present subfield, and when the physical layer packet extension thresholds field is used by the second device to determine the nominal packet padding value used to send the PPDU to the first device, a value of the physical layer packet extension thresholds present subfield is 1.

In a possible implementation, in each set of packet extension thresholds subfields, a nominal packet padding value corresponding to the at least two modulation schemes is a nominal packet padding value corresponding to a second modulation scheme, a constellation index corresponding to the second modulation scheme is a sum of a constellation index corresponding to a highest-order modulation scheme in the at least two modulation schemes and a first value, and the first value is not equal to 0.

In this solution, when the at least two modulation schemes are configured for the second device, the second modulation scheme is configured for the second device by default. A design of the physical layer packet extension thresholds information field in 802.11be is still used, to implement an indication of the nominal packet padding value in a case in which use of the at least two modulation schemes are supported. This is simple.

In a possible implementation, in each set of packet extension thresholds subfields, a modulation threshold corresponding to the NSS being n and the RU corresponding to the sequential number b is a modulation threshold corresponding to the NSS being n and the RU corresponding to the sequential number b', b' is a sum of b and a second value, and the second value is not equal to 0.

In this solution, when the at least two modulation schemes are configured for the second device, and a sequential number corresponding to an RU actually used by the second device is b, the modulation threshold used for determining the nominal packet padding value is the modulation threshold corresponding to the NSS being n and the RU corresponding to the sequential number b' by default. Based on this solution, the design of the physical layer packet extension thresholds information field in 802.11be does not need to be changed, and this is simple.

In a possible implementation, in each set of packet extension thresholds subfields, a modulation threshold corresponding to the NSS being n and the RU corresponding to the sequential number b is a modulation threshold corresponding to the NSS being n' and the RU corresponding to the sequential number b, n' is a sum of n and a third value, and the third value is not equal to 0.

In this solution, when the at least two modulation schemes are configured for the second device, and an NSS actually configured for the second device is n, the modulation threshold used for determining the nominal packet padding value is the modulation threshold corresponding to the NSS being n' and the RU corresponding to the sequential number b by default. In this solution, the design of the physical layer packet extension thresholds information field in 802.11be does not need to be changed, and this facilitates implementation.

In a possible implementation, in each set of packet extension thresholds subfields, a modulation threshold corresponding to the NSS being n and the RU corresponding to the sequential number b corresponds to a nominal packet padding value of 20 microseconds.

When the at least two modulation schemes are configured for the second device, the nominal packet padding value that needs to be used by the second device is 20 microseconds by default. This is simple.

According to a fifth aspect, an embodiment of this application provides a third capability indication method in a wireless local area network. The capability indication method includes: A first device determines capability information, and sends the capability information to a second device. The capability information includes a physical layer packet extension thresholds field, and the physical layer packet extension thresholds field includes an RU index bitmask subfield, an NSS subfield, and a physical layer packet extension thresholds information field. The physical layer packet extension thresholds information field includes a plurality of sets of packet extension thresholds subfields corresponding to different nominal packet padding values. Each set of packet extension thresholds subfields includes a first subfield, and the first subfield indicates a first modulation threshold corresponding to a first space-time stream in n space-time streams when an NSS is n and an RU corresponds to a sequential number b. The first modulation threshold is used by the second device to determine a corresponding nominal packet padding value used when sending a PPDU to the first device on the first space-time stream by using a first modulation scheme. The nominal packet padding value is for the first device supporting the second device in using at least two modulation schemes on n configured spatial streams. A value range of n is a subset of [N1, ..., N2], and both N1 and N2 are integers greater than or equal to 1. A value range of b is a subset of [M1, ..., M2], and both M1 and M2 are integers greater than or equal to 0.

In the method, a corresponding modulation threshold is indicated for each spatial stream. For example, each set of packet extension thresholds subfields may be extended based on a number of spatial streams. For example, each set of packet extension thresholds subfields includes a first subfield and a second subfield. The first subfield indicates a first modulation threshold corresponding to a first space-time stream in n space-time streams when an NSS is n and an RU corresponds to a sequential number b. The first modulation threshold is used by the second device to determine a corresponding nominal packet padding value used when sending a PPDU to the first device on the first space-time stream by using a first modulation scheme. The second subfield indicates a second modulation threshold corresponding to a second space-time stream in the n space-time streams when the NSS is n and the RU corresponds to the sequential number b. The second modulation threshold is used by the second device to determine a corresponding nominal packet padding value used when sending a PPDU to the first device on the second space-time stream by using a second modulation scheme. A corresponding modulation threshold is indicated for each spatial stream, to indicate a nominal packet padding value that needs to be used when the second device uses a plurality of modulation schemes on a plurality of spatial streams. For example, the nominal packet padding value used by the second device is a maximum nominal packet padding value in nominal packet padding values respectively corresponding to the n space-time streams when the NSS is n and the RU corresponds to the sequential number b.

According to a sixth aspect, an embodiment of this application provides a third capability determining method in a wireless local area network. The capability determining method includes: A second device receives capability information from a first device, determines a nominal packet padding value based on a configured frequency domain resource and spatial stream and at least two used modulation schemes, and determines, based on the determined nominal packet padding value, duration of a PE field included in a PPDU that is sent by the second device to the first device. The duration of the PE field enables the first device to have enough time to parse the PPDU received from the second device. The capability information includes a physical layer packet extension thresholds field, and the physical layer packet extension thresholds field includes an RU index bitmask subfield, an NSS subfield, and a physical layer packet extension thresholds information field. The physical layer packet extension thresholds information field includes a plurality of sets of packet extension thresholds subfields corresponding to different nominal packet padding values. Each set of packet extension thresholds subfields includes a first subfield, and the first subfield indicates a first modulation threshold corresponding to a first space-time stream in n space-time streams when an NSS is n and an RU corresponds to a sequential number b. The first modulation threshold is used by the second device to determine a corresponding nominal packet padding value used when sending the PPDU to the first device on the first space-time stream by using a first modulation scheme. The nominal packet padding value is for the first device supporting the second device in using the at least two modulation schemes on n configured spatial streams. A value range of n is a subset of [N1, ..., N2], and both N1 and N2 are integers greater than or equal to 1. A value range of b is a subset of [M1, ..., M2], and M1 and M2 are integers greater than or equal to 0.

Each set of packet extension thresholds subfields further includes a second subfield. The second subfield indicates a second modulation threshold corresponding to a second space-time stream in the n space-time streams when the NSS is n and the RU corresponds to the sequential number b. The second modulation threshold is used by the second device to determine a corresponding nominal packet padding value used when sending the PPDU to the first device on the second space-time stream by using a second modulation scheme.

This corresponds to the solution provided in the fifth aspect. When sending a physical layer data packet to the first device on the plurality of spatial streams by using the at least two modulation schemes, the second device may determine a nominal packet padding value corresponding to each spatial stream, and then determine, based on the nominal packet padding values corresponding to all the spatial streams, a nominal packet padding value that is finally to be used.

Optionally, the capability information further includes a physical layer packet extension thresholds present subfield, and when the physical layer packet extension thresholds field is used by the second device to determine the nominal packet padding value used to send the PPDU to the first device, a value of the physical layer packet extension thresholds present subfield is 1.

In a possible implementation, the nominal packet padding value used by the second device is a maximum nominal packet padding value in nominal packet padding values respectively used on the n space-time streams when the NSS is n and the RU corresponds to the sequential number b, to ensure, as much as possible, that enough time is reserved for the first device to parse the PPDU received from the second device.

According to a seventh aspect, an embodiment of this application provides a fourth capability indication method in a wireless local area network. The capability indication method includes: A first device determines capability information, and sends the capability information to a second device. The capability information includes a physical layer packet extension thresholds field, and the physical layer packet extension thresholds field includes an RU index bitmask subfield, an NSS subfield, and a physical layer packet extension thresholds information field. The physical layer packet extension thresholds information field includes a plurality of sets of packet extension thresholds subfields corresponding to different nominal packet padding values. Each set of packet extension thresholds subfields includes a first subfield, and the first subfield indicates a first modulation threshold corresponding to a first subcarrier set in a frequency domain resource when an NSS is n and a frequency domain resource corresponds to a sequential number b. The first modulation threshold is used by the second device to determine a corresponding nominal packet padding value used when sending the PPDU to the first device on the first subcarrier set by using a first modulation scheme. The nominal packet padding value is for the first device supporting the second device in using at least two modulation schemes on the configured frequency domain resource. A value range of n is a subset of [N1, ..., N2], and both N1 and N2 are integers greater than or equal to 1. A value range of b is a subset of [M1, ..., M2], and both M1 and M2 are integers greater than or equal to 0. The frequency domain resource includes i subcarrier sets, and i is a positive integer.

Each set of packet extension thresholds subfields further includes a second subfield, and the second subfield indicates a second modulation threshold corresponding to a second subcarrier set in the frequency domain resource when the NSS is n and the frequency domain resource corresponds to the sequential number b. The second modulation threshold is used by the second device to determine a corresponding nominal packet padding value used when sending the PPDU to the first device on the second subcarrier set by using a second modulation scheme.

In the method, a corresponding modulation threshold is indicated for each subcarrier set. For example, each set of packet extension thresholds subfields may be extended based on a number of subcarrier sets. For example, each set of packet extension thresholds subfields includes a first subfield and a second subfield. A corresponding modulation threshold is indicated for each subcarrier set, to indicate a nominal packet padding value used when the second device uses a plurality of modulation schemes on a plurality of subcarrier sets. For example, the nominal packet padding value used by the second device on the frequency domain resource is a maximum nominal packet padding value in nominal packet padding values respectively used on the i subcarrier sets when the NSS is n and the RU corresponds to the sequential number b.

According to an eighth aspect, an embodiment of this application provides a fourth capability determining method in a wireless local area network. The capability determining method includes: A second device receives capability information from a first device, determines a nominal packet padding value based on a configured frequency domain resource and spatial stream and at least two used modulation schemes, and determines, based on the determined nominal packet padding value, duration of a PE field included in a PPDU that is sent by the second device to the first device. The duration of the PE field enables the first device to have enough time to parse the PPDU received from the second device.

The capability information includes a physical layer packet extension thresholds field, and the physical layer packet extension thresholds field includes an RU index bitmask subfield, an NSS subfield, and a physical layer packet extension thresholds information field. The physical layer packet extension thresholds information field includes a plurality of sets of packet extension thresholds subfields corresponding to different nominal packet padding values. Each set of packet extension thresholds subfields includes a first subfield, and the first subfield indicates a first modulation threshold corresponding to a first subcarrier set in a frequency domain resource when an NSS is n and a frequency domain resource corresponds to a sequential number b. The first modulation threshold is used by the second device to determine a corresponding nominal packet padding value used when sending the PPDU to the first device on the first subcarrier set by using a first modulation scheme. The nominal packet padding value is for the first device supporting the second device in using the at least two modulation schemes on the configured frequency domain resource. A value range of n is a subset of [N1, ..., N2], and both N1 and N2 are integers greater than or equal to 1. A value range of b is a subset of [M1, ..., M2], and both M1 and M2 are integers greater than or equal to 0. The frequency domain resource includes i subcarrier sets, and i is a positive integer.

Each set of packet extension thresholds subfields further includes a second subfield, and the second subfield indicates a second modulation threshold corresponding to a second subcarrier set in the frequency domain resource when the NSS is n and the frequency domain resource corresponds to the sequential number b. The second modulation threshold is used by the second device to determine a corresponding nominal packet padding value used when sending the PPDU to the first device on the second subcarrier set by using a second modulation scheme.

This corresponds to the solution provided in the seventh aspect. The nominal packet padding value used by the second device on the frequency domain resource is a maximum nominal packet padding value in nominal packet padding values respectively used on the i subcarrier sets when the NSS is n and the RU corresponds to the sequential number b, to ensure, as much as possible, that enough time is reserved for the first device to parse the PPDU received from the second device.

Optionally, the capability information further includes a physical layer packet extension thresholds present subfield, and when the physical layer packet extension thresholds field is used by the second device to determine the nominal packet padding value used to send the PPDU to the first device, a value of the physical layer packet extension thresholds present subfield is 1.

According to a ninth aspect, an embodiment of this application provides a communication apparatus. The communication apparatus has a function of implementing behavior in the method examples in any one of the first aspect to the eighth aspect. For beneficial effect, refer to descriptions of the first aspect to the eighth aspect. Details are not described herein again.

The communication apparatus may be the first communication apparatus in the first aspect, the third aspect, the fifth aspect, or the seventh aspect. For example, the communication apparatus may be a station. Alternatively, the communication apparatus may be an apparatus that can support the first device in the first aspect, the third aspect, the fifth aspect, or the seventh aspect in implementing a function required by the method provided in the first aspect, the third aspect, the fifth aspect, or the seventh aspect. For example, the communication apparatus may be a chip or a chip system in the first device.

The communication apparatus may alternatively be the second communication apparatus in the second aspect, the fourth aspect, the sixth aspect, or the eighth aspect. For example, the communication apparatus may be an access point. The communication apparatus may be an apparatus that can support the second device in the second aspect, the fourth aspect, the sixth aspect, or the eighth aspect in implementing a function required by the method provided in the second aspect, the fourth aspect, the sixth aspect, or the eighth aspect. For example, the communication apparatus may be a chip or a chip system in the second device.

In a possible design, the communication apparatus includes a corresponding means (means) or module configured to perform the method in any one of the first aspect to the eighth aspect. For example, the communication apparatus includes a processing unit (sometimes also referred to as a processing module or a processor) and/or a transceiver unit (sometimes also referred to as a transceiver module or a transceiver). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional unit, the functional unit is referred to as a transceiver unit, and the functional unit can implement the sending function and the receiving function. Alternatively, the sending unit and the receiving unit may be different functional units, and the transceiver unit is a general term for these functional units. These units (modules) may perform corresponding functions in the method examples in any one of the first aspect to the eighth aspect. For details, refer to the detailed descriptions in the method examples. Details are not described herein.

According to a tenth aspect, an embodiment of this application provides a communication apparatus. The communication apparatus may be the communication apparatus in the ninth aspect of the foregoing embodiments, or may be a chip or a chip system disposed in the communication apparatus in the ninth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the first device or the second device in the foregoing method embodiments.

According to an eleventh aspect, an embodiment of this application provides a chip system. The chip system includes a processor, may further include a memory and/or a communication interface, and is configured to implement the method in any one of the first aspect to the eighth aspect. Optionally, the chip system further includes the memory. The memory is configured to store a computer program (which may also be referred to as code or instructions). The processor is configured to invoke the computer program from the memory and run the computer program, to enable a device on which the chip system is installed to perform the method in any one of the first aspect to the eighth aspect and any possible implementation of any one of the first aspect to the eighth aspect. The chip system may include a chip, or may include a chip and another discrete component.

According to a twelfth aspect, an embodiment of this application provides a communication apparatus. The communication apparatus includes an input/output interface and a logic circuit. The input/output interface is configured to input and/or output information. The input/output interface may be an interface circuit, an output circuit, an input circuit, a pin, a related circuit, or the like. The logic circuit is configured to perform the method in any one of the first aspect to the eighth aspect.

During specific implementation, the communication apparatus may be a chip, the input circuit may be an input pin, the output circuit may be an output pin, and the logic circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the input/output interface and the logic circuit are not limited in this application.

According to a thirteenth aspect, an embodiment of this application provides a communication system. The communication system includes the communication apparatus, in the ninth aspect, configured to implement a function in the first aspect and the communication apparatus, in the ninth aspect, configured to implement a function in the second aspect. Alternatively, the communication system includes the communication apparatus, in the ninth aspect, configured to implement a function in the third aspect and the communication apparatus, in the ninth aspect, configured to implement a function in the fourth aspect. Alternatively, the communication system includes the communication apparatus, in the ninth aspect, configured to implement a function in the fifth aspect and the communication apparatus, in the ninth aspect, configured to implement a function in the sixth aspect. Alternatively, the communication system includes the communication apparatus, in the ninth aspect, configured to implement a function in the seventh aspect and the communication apparatus, in the ninth aspect, configured to implement the function in the eighth aspect.

According to a fourteenth aspect, this application provides a computer-readable storage medium. The computer-readable storage medium stores a computer program. When the computer program is run, the method in any one of the first aspect to the eighth aspect is implemented.

According to a fifteenth aspect, a computer program product is provided. The computer program product includes computer program code. When the computer program code is run, the method in any one of the first aspect to the eighth aspect is performed.

For beneficial effect of the ninth aspect to the fifteenth aspect and the implementations of the ninth aspect to the fifteenth aspect, refer to the descriptions of the beneficial effect of the first aspect to the eighth aspect and the implementations of the first aspect to the eighth aspect.

### BRIEF DESCRIPTION OF DRAWINGS

FIG. 1 is a diagram of a network architecture of a WLAN to which an embodiment of this application is applicable;
FIG. 2 shows a PPDU bit padding process on a last coded symbol;
FIG. 3 is a diagram of a PPDU according to an embodiment of this application;
FIG. 4 is a diagram of an HE physical layer capabilities information field according to an embodiment of this application;
FIG. 5 is a diagram of an HE capabilities element according to an embodiment of this application;
FIG. 6 is another diagram of an HE physical layer capabilities information field according to an embodiment of this application;
FIG. 7 is a diagram of a structure of a physical layer packet extension thresholds field according to an embodiment of this application;
FIG. 8 is a diagram of a structure of a physical layer packet extension thresholds information field according to an embodiment of this application;
FIG. 9 is a diagram of a principle of determining a nominal packet padding value based on a constellation index corresponding to a used modulation scheme and a physical layer packet extension thresholds field according to an embodiment of this application;
FIG. 10 is a diagram of another structure of a physical layer packet extension thresholds field according to an embodiment of this application;
FIG. 11 is a diagram of another structure of a physical layer packet extension thresholds information field according to an embodiment of this application;
FIG. 12 is a schematic flowchart of a first capability indication method in a wireless local area network according to an embodiment of this application;
FIG. 13 is a schematic flowchart of a second capability indication method in a wireless local area network according to an embodiment of this application;
FIG. 14 is a diagram of a first principle of determining a nominal packet padding value based on FIG. 13 according to an embodiment of this application;
FIG. 15 is a diagram of a second principle of determining a nominal packet padding value based on FIG. 13 according to an embodiment of this application;
FIG. 16 is a diagram of a third principle of determining a nominal packet padding value based on FIG. 13 according to an embodiment of this application;
FIG. 17 is a schematic flowchart of a third capability indication method in a wireless local area network according to an embodiment of this application;
FIG. 18 is a diagram of a structure of a packet extension thresholds subfield in the method shown in FIG. 17 according to an embodiment of this application;
FIG. 19 is a diagram of another structure of a packet extension thresholds subfield in the method shown in FIG. 17 according to an embodiment of this application;
FIG. 20 is a diagram of a principle of determining a nominal packet padding value based on the method shown in FIG. 17 according to an embodiment of this application;
FIG. 21 is a schematic flowchart of a fourth capability indication method in a wireless local area network according to an embodiment of this application;
FIG. 22 is a diagram of a structure of a packet extension thresholds subfield in the method shown in FIG. 21 according to an embodiment of this application;
FIG. 23 is a diagram of a principle of determining a nominal packet padding value based on the method shown in FIG. 21 according to an embodiment of this application;
FIG. 24 is a diagram of a structure of a communication apparatus according to an embodiment of this application; and
FIG. 25 is a diagram of another structure of a communication apparatus according to an embodiment of this application.

### DESCRIPTION OF EMBODIMENTS

Embodiments of this application are applicable to a wireless local area network (wireless local area network, WLAN) scenario, or are applicable to the IEEE 802.11 system standard. The IEEE 802.11 system standard includes, for example, 802.11a/b/g, 802.11n, 802.11ac, 802.11ax, 802.11be, or a next-generation standard. Embodiments of this application are alternatively applicable to a wireless local area network system, for example, an Internet of things (Internet of things, IoT) network or a vehicle-to-everything (Vehicle to X, V2X) network. Certainly, embodiments of this application are alternatively applicable to other possible communication systems, for example, a long term evolution (long term evolution, LTE) system, a new radio (new radio, NR) system, and a future next-generation communication system.

The following uses an example in which embodiments of this application are applicable to a WLAN scenario. It should be understood that the WLAN develops from the 802.11a/g standard, and goes through 802.11n, 802.11ac, 802.11ax, and 802.11be that is currently being discussed. 802.11n may also be referred to as high throughput (high throughput, HT), 802.11ac may also be referred to as very high throughput (very high throughput, VHT), 802.11ax may also be referred to as high efficiency (high efficient, HE) or Wi-Fi 6, and 802.11be may also be referred to as extremely high throughput (extremely high throughput, EHT) or Wi-Fi 7. Standards before HT, for example, 802.11a/b/g, are collectively referred to as non-high throughput (Non-HT).

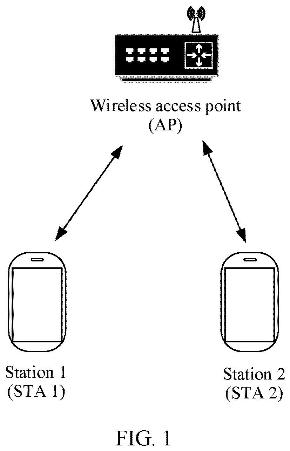

A network architecture to which embodiments of this application are applicable may include one or more access point (access point, AP) stations and one or more non-access point stations (none access point station, non-AP STA). For ease of description, in this specification, the access point station is referred to as an access point (AP), and the non-access point station is referred to as a station (STA). FIG. 1 is a diagram of a network architecture of a WLAN to which an embodiment of this application is applicable. In FIG. 1, an example in which the WLAN includes one wireless access point (access point, AP) and two stations (stations, STAs) is used. In the WLAN, a physical layer may transmit information based on a physical layer data packet. A STA associated with the AP can receive a PPDU sent by the AP, and can also send a physical layer data packet to the AP. The physical layer data packet may be a physical protocol data unit (physical layer protocol data unit, PPDU). The AP and the STA in embodiments of this application may be an AP and a STA that are applicable to the IEEE 802.11 system standard. Numbers of APs and STAs in FIG. 1 are merely an example. There may be more or less APs and STAs.

The STA in embodiments of this application may be a wireless communication chip, a wireless sensor, or a terminal that supports media access control (media access control, MAC) and a physical layer (physical, PHY) in the 802.11 system standard. The terminal may include various devices having a wireless communication function, for example, a handheld device, a vehicle-mounted device, a wearable device, a computing device, another processing device connected to a wireless modem, user equipment (user equipment, UE) in various forms, a mobile station (mobile station, MS), a terminal (terminal), a terminal device (terminal equipment), a portable communication device, a handheld device, a portable computing device, an entertainment device, a game device or system, a global positioning system device, or any other suitable device configured to perform network communication through a wireless medium. For example, the STA may be a router, a switch, a bridge, or the like. Herein, for ease of description, the devices mentioned above are collectively referred to as stations or STAs.

The AP is an apparatus that provides a wireless communication function for a STA associated with the AP, and is usually a network-side product that supports MAC and a PHY in the 802.11 system standard. For example, the AP may be a communication device, for example, a base station, a router, a gateway, a repeater, a communication server, a switch, or a bridge. The base station may include a macro base station, a micro base station, a relay station, and the like in various forms. Herein, for ease of description, the devices mentioned above are collectively referred to as APs.

FIG. 1 shows an example in which an embodiment of this application is applicable to communication between an AP and a STA. In some embodiments, embodiments of this application are also applicable to communication between APs. For example, the APs may communicate with each other by using a distributed system (distributed system, DS). Embodiments of this application are also applicable to communication between STAs.

To allow a receiver to have enough time to parse/process a PPDU received from a transmitter, it is specified in 802.11ax that pre-forward error correction padding (pre-(forward error correction, FEC) padding), post-forward error correction padding (post-FEC padding), and packet extension (packet extension) may be introduced to the PPDU. The pre-FEC padding and excess information (excess information) occupy about a multiple of one quarter (for example, one quarter, two quarters, three quarters, and all) of subcarriers on a last coded symbol, and remaining subcarriers may be used to carry the post-FEC padding.

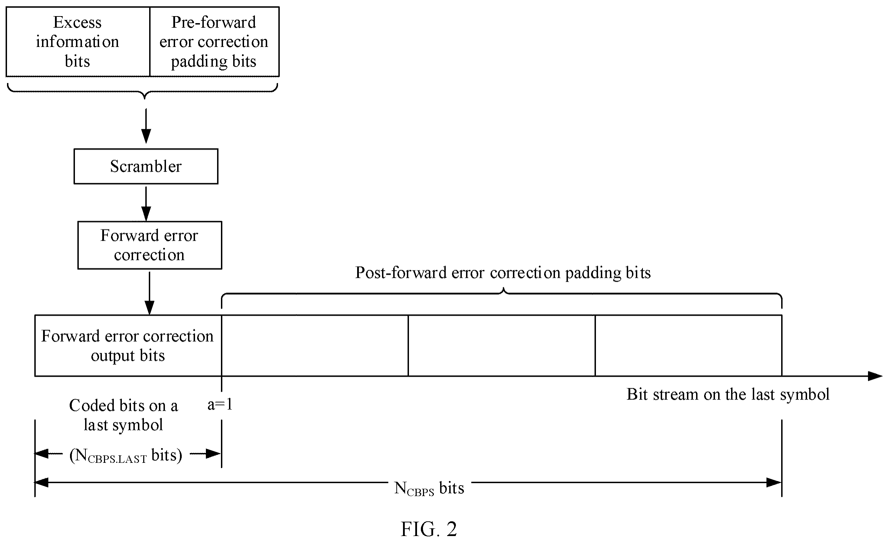

For ease of understanding, refer to FIG. 2. FIG. 2 shows a PPDU bit padding process on a last coded symbol. In FIG. 2, a indicates that excess information bits and pre-forward error correction padding bits occupy about a multiples of one quarter of subcarriers on a symbol after scrambling and coding. As shown in FIG. 2, a=1 indicates that the excess information bits and the pre-forward error correction padding bits occupy about one quarter of subcarriers on a symbol after scrambling and coding; a=2 indicates that the excess information bits and the pre-forward error correction padding bits occupy about two quarters of subcarriers on a symbol after scrambling and coding; a=3 indicates that the excess information bits and the pre-forward error correction padding bits occupy about three quarters of subcarriers on a symbol after scrambling and coding; and a=3 indicates that the excess information bits and the pre-forward error correction padding bits occupy all subcarriers on a symbol after scrambling and coding. Subcarriers other than a multiple of one quarter of subcarriers occupied by the pre-FEC padding and the excess information are used to carry the post-FEC padding.

When decoding the last coded symbol of the PPDU, the receiver may decode only the multiple of one quarter of subcarriers occupied by the pre-FEC padding and the excess information, without decoding the entire coded symbol. For example, the receiver does not need to decode subcarriers occupied by the post-FEC padding. This saves decoding time and reserves more time for parsing the PPDU.

As shown in FIG. 2, remaining subcarriers on a symbol are padded through post-FEC padding, so that a number of bits occupied by data reaches N_{CBPS} bits, where N_{CBPS} indicates a number of coded bits per symbol (coded bits per symbol). However, due to uncertainty of duration corresponding to post-FEC padding and limitation of total duration, time reserved for parsing the PPDU may not meet minimum time (for example, 8 µs and 16 µs) required by the receiver. To ensure that the time reserved for parsing the PPDU reaches the minimum time required by the receiver, a field that may need to be added is introduced on the last symbol of the PPDU, that is, a PE field (field). Duration based on the PE field enables the time reserved for parsing the PPDU to meet the minimum time required by the receiver. The duration of the PE field may also be referred to as nominal packet extension time (nominal T_{PE}). Processing time provided by post-FEC padding and the nominal packet extension time are combined to obtain actual packet extension time (T_{PE}). In other words, the actual packet extension time T_{PE} is greater than or equal to the nominal packet extension time. Usually, the actual packet extension time is a minimum value required by the receiver. The nominal packet extension time (nominal T_{PE}) is related to a nominal packet padding value (nominal packet padding value) and a value of a. The nominal packet padding value may also be referred to as a minimum packet padding value or a small packet padding value.

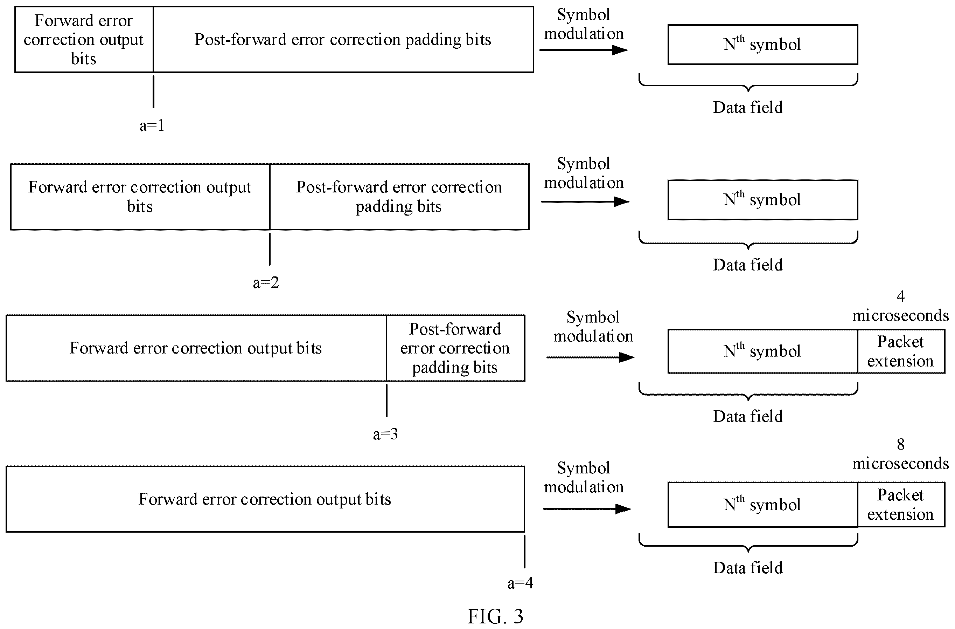

For ease of understanding, FIG. 3 is a diagram of a PPDU. FIG. 3 shows duration of a PE field in a PPDU when a=1, a=2, a=3, and a=4 in FIG. 2. For a same nominal packet padding value, duration corresponding to post-FEC padding varies based on different values of a. Therefore, the transmitter may not add the PE field or add a PE field with different duration. When the duration corresponding to post-FEC padding is long, the duration of the PE field is short. When the duration corresponding to post-FEC padding is short, the duration of the PE field is long. For example, when a=1, the duration corresponding to post-FEC padding is about 12 µs, 12 µs is enough for the receiver to decode the subcarriers occupied by the pre-FEC padding and the excess information, and the transmitter does not need to add the PE field. When a=2, the duration corresponding to post-FEC padding is about 8 µs, 8 µs is enough for the receiver to decode the subcarriers occupied by the pre-FEC padding and the excess information, and the transmitter does not need to add the PE field. When a=3, the duration corresponding to post-FEC padding is about 4 µs, and 4 µs is not enough for the receiver to completely decode the subcarriers occupied by the pre-FEC padding and the excess information. In this case, the transmitter may add a PE field, and duration of the PE field plus 4 µs are enough for the receiver to completely decode the subcarriers occupied by the pre-FEC padding and the excess information. When a=4, the duration corresponding to post-FEC padding is about 0 µs, and the duration corresponding to post-FEC padding is not enough for the receiver to completely decode the subcarriers occupied by the pre-FEC padding and the excess information. In this case, the transmitter may add a PE field, and duration of the PE field plus the duration corresponding to post-FEC padding are enough for the receiver to completely decode the subcarriers occupied by the pre-FEC padding and the excess information.

For example, Table 1 shows a relationship between the nominal packet extension time, the value of a, and the nominal packet padding value.

**Table 1 Nominal packet extension time value (nominal T_{PE} value)**

| a | Nominal packet padding value (nominal packet padding value) | | |
|---|---|---|---|
| | **0 µs** | **8 µs** | **16 µs** |
| 1 | 0 µs | 0 µs | 4 us |
| 2 | 0 µs | 0 µs | 8 µs |
| 3 | 0 µs | 4 µs | 12 µs |
| 4 | 0 µs | 8 µs | 16 µs |

The second row (bold font) in Table 1 represents the nominal packet padding value, which may be 0 µs, 8 µs, or 16 µs. The third row to the sixth row in Table 1 are the nominal packet extension time, namely, the duration of the PE field. The nominal packet extension time may not be equal to the minimum time (namely, the nominal packet padding value like 0 µs, 8 µs, or 16 µs) required by the receiver. For example, the nominal packet padding value is equal to 8 µs. As described above, when a=1, 12 µs is enough for the receiver to decode the subcarriers occupied by the pre-FEC padding and the excess information, the PE field does not need to be added, and the nominal packet extension time may be 0 µs. When a=3, 4 µs is not enough for the receiver to completely decode the subcarriers occupied by the pre-FEC padding and the excess information. In this case, the transmitter adds a PE field, and duration of the PE field is 8 µs - 4 µs = 4 µs, that is, the nominal packet extension time may be 4 µs.

For the two communication ends, to ensure that the receiver has enough time to parse the PPDU received from the transmitter, the receiver may indicate, to the transmitter, a nominal packet padding value used by the transmitter when the transmitter sends the PPDU to the receiver. The transmitter may determine the duration of the PE field based on the nominal packet padding value indicated by the receiver and a. The transmitter pads, based on the duration of the PE field, the packet extension included in the PPDU sent to the receiver. Because data in the packet extension does not need to be parsed by the receiver, it can be ensured that the receiver has enough time to parse the received PPDU.

The following describes two solutions in which the receiver indicates the nominal packet padding value to the transmitter. The following two solutions are referred to as a static indication manner and a dynamic indication manner. In the static indication manner, the receiver indicates the nominal packet padding value based on a nominal packet padding subfield (nominal packet padding subfield). In the dynamic indication manner, the receiver indicates the nominal packet padding value by indicating a modulation threshold based on a physical layer packet extension thresholds subfield (physical packet extension (PPE) thresholds subfield). The static indication manner and the dynamic indication manner may be distinguished by a physical layer packet extension thresholds present subfield (physical packet extension (PPE) thresholds present subfield). When a value of the physical layer packet extension thresholds present subfield is 0, it indicates that the physical layer packet extension thresholds subfield is not present, and the nominal packet padding subfield indicates the nominal packet padding value. When the value of the physical layer packet extension thresholds present subfield is 1, it indicates that the physical layer packet extension thresholds subfield is present, and the physical layer packet extension thresholds subfield indicates the nominal packet padding value. It may be considered that, when the value of the physical layer packet extension thresholds present subfield is 1, the nominal packet padding subfield has no meaning, and the nominal packet padding value is determined by the packet extension thresholds subfield.

The following describes the static indication manner and the dynamic indication manner. For ease of description, an example in which a first device is a receiver and a second device is a transmitter is used below.

**Static indication manner:** When the value of the physical layer packet extension thresholds present subfield is 0, for the nominal packet padding value indicated by the nominal packet padding subfield, refer to Table 2. A STA in Table 2 may be an access point station or a non-access point station.

**Table 2 Nominal packet padding subfield (nominal packet padding subfield)**

| Subfield | Definition | Meaning |
|---|---|---|
| Nominal packet padding subfield | If a PPE thresholds present subfield indicates 0, the nominal packet padding subfield indicates a nominal packet padding value, and the value is the same for all modulation schemes, numbers of spatial streams (number of spatial streams, NSS), and resource unit (resource unit, RU) allocations. | If the nominal packet padding value is 0 µs for all constellations, NSSs, and RU allocations that the STA supports, the nominal packet padding subfield is set to 0. (Set to 0 if the nominal packet padding is 0 µs for all constellations, NSS and RU allocations the STA supports.) |
| | | If the nominal packet padding value is 8 µs for all constellations, NSSs, and RU allocations that the STA supports, the nominal packet padding subfield is set to 1. (Set to 1 if the nominal packet padding is 8 µs for all constellations, NSS and RU allocations the STA supports.) |
| | (Indicates the nominal packet padding to be used for all constellations, NSS and RU allocations the STA supports if the PPE Thresholds Present subfield is set to 0.) | |
| | | If the nominal packet padding value is 16 µs for all constellations, NSSs, and RU allocations that the STA supports, the nominal packet padding subfield is set to 2. (Set to 2 if the nominal packet padding is 16 µs for all constellations, NSS and RU allocations the STA supports.) |
| | | When the PPE thresholds presence subfield is 1, the nominal packet padding subfield is set to 3, indicating a reserved state. (The value 3 is reserved, Reserved if the PPE Thresholds Present subfield is 1.) |

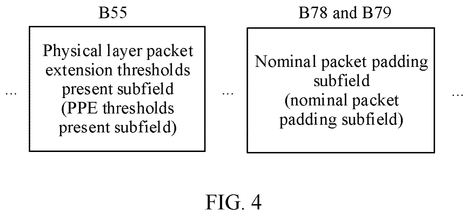

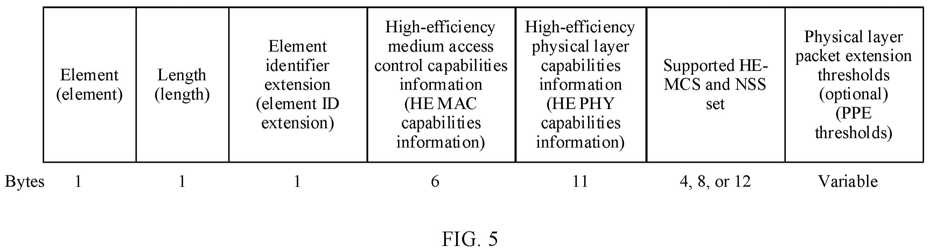

The PPE thresholds present subfield and the nominal packet padding subfield are carried in an HE physical layer capabilities information field (HE PHY capabilities information field), as shown in FIG. 4. FIG. 4 schematically shows an HE physical layer capabilities information field. The PPE thresholds present subfield (B55) occupies 1 bit. The nominal packet padding subfield (B78 and B79) occupies 2 bits. The HE physical layer capabilities information field is included in an HE capabilities element (HE capabilities element), as shown in FIG. 5. The HE capabilities element may include an element field (element field), a length field (length field), an element identifier extension field (element ID extension field), an HE medium access control capabilities information field (HE (medium access control, MAC) capabilities Information), an HE physical layer capabilities information field (HE PHY capabilities information), a supported high efficiency (HE)-modulation and coding scheme (modulation and coding scheme, MCS) and number of spatial streams (number of spatial streams, NSS) set field (Supported HE-MCS and NSS Set), and may further include a physical layer packet extension thresholds field (PPE thresholds field). In this embodiment of this application, a number of bits occupied by each field or subfield included in the HE capabilities element is not limited. As shown in FIG. 5, the element field occupies 1 byte, the length field occupies 1 byte, the element identifier extension field occupies 1 byte, the HE medium access control capabilities information field occupies 6 bytes, the HE physical layer capabilities information field occupies 11 bytes, and the physical layer packet extension thresholds field occupies a variable (variable) number of bits. In addition, the physical layer packet extension thresholds field is optional, that is, not mandatory.

It may be understood that, when a value of the PPE thresholds present subfield in FIG. 4 is 1, the nominal packet padding value is indicated by the PPE thresholds field in FIG. 5. When a value of the PPE thresholds present subfield in FIG. 4 is 0, the nominal packet padding value is indicated by the nominal packet padding subfield in FIG. 4.

As a number of spatial streams supported by each device increases, for example, the number of spatial streams supported by each device changes from 8 to 16, a modulation scheme supported by each device changes from 1K-quadrature amplitude modulation (quadrature amplitude modulation, QAM) to 4K-QAM, and a bandwidth supported by each device is changed from 160 MHz to 320 MHz. In these cases, the receiver needs more processing time. In view of this, a nominal packet padding value greater than 16 µs is proposed, for example, a nominal packet padding value supporting 20 µs is proposed in 802.11be. The NSS may be replaced with a number of space-time streams (number of space-time streams, NSTS) in embodiments of this application.

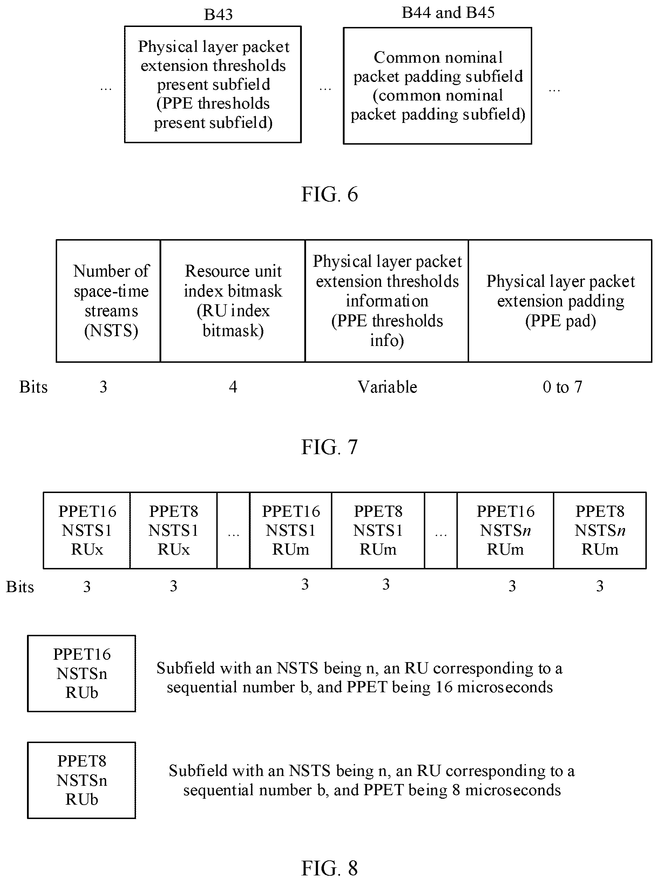

The nominal packet padding value of 20 µs may be indicated by a common nominal packet padding (Common Nominal Packet Padding) subfield shown in FIG. 6. The common nominal packet padding subfield in FIG. 6 and the nominal packet padding subfield in FIG. 4 differ only in names. Therefore, Table 2 is also applicable to the nominal packet padding value indicated by the common nominal packet padding subfield. A difference from the nominal packet padding subfield lies in that, in the common nominal packet padding subfield, a value 3 is no longer reserved. When the PPE thresholds presence subfield is 0, a value of the common nominal packet padding subfield is 3 if the nominal packet padding value is 16 µs corresponding to modes with constellation<=1024, NSTS<=8, and RU allocations<=996*2 that the STA supports; otherwise, the nominal packet padding value is 20 µs. (Set to 3 if the nominal packet padding is 16 µs for all modes with constellation<=1024, NSTS<=8 and RU<=996*2, and 20 µs for all other modes the STA supports, Reserved if the PPE Thresholds Present subfield is 1). For example, the STA is a receiver, and the AP is a transmitter. When the value of the nominal packet padding subfield is 3, a constellation index corresponding to a modulation scheme supported by the receiver is less than or equal to a constellation index corresponding to 1K-QAM, an NSTS is less than or equal to 8, and an MRU/RU allocation size of the transmitter is less than or equal to 2*996, a nominal packet padding value is 16 µs; otherwise, a nominal packet padding value is 20 µs. The constellation supported by the STA is notified by the STA to the AP via capability information.

**Dynamic indication manner:** A physical layer packet extension thresholds present subfield and a physical layer packet extension thresholds field (PPE thresholds field) in the PPDU indicate the nominal packet padding value. In comparison with the static indication manner, in the dynamic indication manner, different nominal packet padding values may be indicated based on different NSTSs, RU/multi-RU (multiple resource unit, MRU) sizes, and modulation schemes. This is more flexible. In embodiments of this application, the MRU includes a plurality of RUs. The plurality of RUs may be a plurality of RUs that are consecutive, or may be a plurality of RUs that are inconsecutive.

FIG. 7 is a diagram of a structure of a physical layer packet extension thresholds field. The physical layer packet extension thresholds field includes a number of space-time streams (number of space-time streams, NSTS) subfield, an RU index bitmask subfield (RU Index Bitmask subfield), a physical layer packet extension thresholds information (PPE Thresholds info) field, and a physical layer packet extension padding (PPE padding) field. The NSTS subfield may be equivalently replaced with an NSS subfield, and may indicate a number of space-time streams used for sending the PPDU. For example, the NSTS subfield occupies 3 bits, and values of the 3 bits are 0 to 7 that may respectively indicate a first stream to an eighth stream. In other words, one value/status value of the 3 bits corresponds to one number of space-time streams. The RU index bitmask subfield may indicate an RU size. Table 3 shows a relationship between the RU index bitmask subfield and the RU size.

**Table 3**

| **RU allocation index** | **RU allocation size** |
|---|---|
| 0 | 242 |
| 1 | 484 |
| 2 | 996 |
| 3 | 2*996 |

The RU index bitmask subfield is a bitmap (bitmap). In Table 3, the RU allocation index indicates a specific bit in the bitmap. For example, in Table 3, the RU index bitmask occupies 4 bits. The first row in Table 3 indicates that the first bit of the RU index bitmask is set to 1, and therefore, a corresponding RU indicated in FIG. 7 is 242. Similarly, the second row indicates that the second bit of the RU index bitmask is set to 1, and therefore, a corresponding RU indicated in FIG. 7 is 484. The rest may be deduced by analogy. The RU allocation index may also be referred to as an RU sequential number (number). A smaller sequential number (number) indicates a smaller RU size. In this specification, a granularity of the RU size is subcarrier. For example, 242 refers to 242 subcarriers, and 484 refers to 484 subcarriers.

It should be understood that one or more of an NSTS, an RU, and a modulation scheme used by the transmitter are different, and minimum processing time (or corresponding nominal packet padding values) required by the receiver varies accordingly. In an implementation, modulation thresholds corresponding to NSTSs from a first stream to an N^{th} stream and different RU sizes indicated from a minimum granularity are provided in an exhaustive or a traversal manner. A value of N may be a maximum value of bits used by the NSTS subfield plus 1. For example, when the NSTS subfield uses 3 bits, and the maximum value of the 3 bits is 7, the maximum number of streams that may be indicated by the NSTS subfield is 8 (7+1=8). For example, when the NSTS subfield uses 6 bits, and a maximum value of the 6 bits is 15, the maximum number of streams that may be indicated by the NSTS subfield is 16 (15+1=16). In this specification, a value set of the NSTS subfield may be denoted as [1, ... NSTN+1]. The N^{th} stream is an (NSTS+1)^{th} stream.

The modulation threshold may indicate a modulation scheme, and the modulation threshold may be understood as a constellation index threshold corresponding to the modulation scheme. A relationship between the modulation scheme and the corresponding constellation index is shown in Table 4.

**Table 4 Constellation index (constellation index)**

| **Constellation index** | **Corresponding transmission constellation** |
|---|---|
| 0 | Binary phase shift keying (binary phase shift keying, BPSK) |
| 1 | Quadrature phase shift keying (quadrature phase shift keying, QPSK) |
| 2 | 16-quadrature amplitude modulation (quadrature amplitude modulation, QAM) |
| 3 | 64-QAM |
| 4 | 256-QAM |
| 5 | 1024-QAM |
| 6 | Reserved |
| 7 | None |

For each RU, modulation thresholds corresponding to the NSTSs from the first stream to the N^{th} stream and different RU sizes indicated from the minimum granularity are provided based on the PPE thresholds info field in a traversal manner. The PPE thresholds info field includes a set of packet extension thresholds subfields indicating modulation thresholds corresponding to different nominal packet padding values. In other words, the PPE thresholds info field includes sets of a plurality of packet extension thresholds subfields corresponding to different nominal packet padding values, each set of packet extension thresholds subfields includes a plurality of packet extension thresholds subfields, and each packet extension thresholds subfield indicates a modulation threshold corresponding to an NSS being n and an RU corresponding to a sequential number b. It should be understood that a value range of n is [1, ..., N]. The sequential number b herein may be considered as an RU allocation index, and indicates an RU size. For example, a value range of b is [x, ..., m], where [x, ..., m] is a bit list formed by sequentially setting all bits set to 1 in the RU index bitmask subfield, and x is a least significant bit in the bit list. (where b belongs to the set of RU allocation indices equal to the ordered list of bit positions of all bits that are set to 1 in the RU Index Bitmask subfield, with y being the lowest value). Table 3 is used as an example. If all bits in the RU index bitmask subfield are set to 1, the value range of b is [0, ..., 3], that is, x is equal to 0, and m is equal to 3. If the second bit and the fourth bit in the RU index bitmask subfield are set to 1, the value range of b is [1, 3].

For example, FIG. 8 is a diagram of a structure of a PPE thresholds info field. In FIG. 8, the PPE thresholds info field includes a set of packet extension thresholds subfields indicating modulation thresholds corresponding to a nominal packet padding value of 8 µs and a set of packet extension thresholds subfields indicating modulation thresholds corresponding to a nominal packet padding value of 16 µs. In this specification, the set of packet extension thresholds subfields indicating the modulation thresholds corresponding to the nominal packet padding value of 8 µs is referred to as PPET8 NSTSn RUb subfields, and any subfield of the PPET8 NSTSn RUb subfields is referred to as a PPET8 NSTSn RUb subfield, indicating a modulation threshold corresponding to an NSTS being n and an RU corresponding to a sequential number b. For example, if the PPET8 NSTSn RUb subfield occupies 3 bits, the PPET8 NSTSn RUb subfields may indicate eight modulation thresholds. Similarly, the set of packet extension thresholds subfields indicating the modulation thresholds corresponding to the nominal packet padding value of 16 µs may be referred to as PPET16 NSTSn RUb subfields, and any subfield of the PPET16 NSTSn RUb subfields is referred to as a PPET16 NSTSn RUb subfield, indicating a modulation threshold corresponding to an NSTS being n and an RU corresponding to a sequential number b. The PPET8 NSTSn RUb subfield may also be referred to as a PPET8 for short, that is, PPET8 represents one PPET8 NSTSn RUb subfield. Similarly, the PPET16 NSTSn RUb subfield may be referred to as a PPET16 for short.

In FIG. 8, the value of n traverses from 1 to N, that is, n is an element in [1, ..., N], and b traverses from x to m. It may be considered that FIG. 8 provides indications of a first stream to an N^{th} stream in an exhaustive or traversal manner and provides RU sizes indicated from a minimum granularity in an exhaustive or traversal manner. In other words, the PPET16 NSTSn RUb and PPET8 NSTSn RUb subfields are present for all values of n and b where 1≤ n ≤ (N) and where b = [x, ..., m] is the set of integers equal to the ordered list of bit positions of all bits that are set to 1 in the RU Index Bitmask subfield, with m being the lowest value.

Based on the indication of FIG. 8, the nominal packet padding value used by the second device is determined by a combination of the PPET8 NSTSn RUb subfield and the PPET16 NSTSn RUb subfield. Specifically, the second device may determine the nominal packet padding value according to Table 5. In other words, if a result of comparison between a constellation index corresponding to a modulation scheme used by the second device and a modulation threshold indicated by the PPET8 NSTSn RUb subfields and a result of comparison between the constellation index corresponding to the modulation scheme used by the second device and a modulation threshold indicated by the PPET16 NSTSn RUb subfields meet a condition of a row in Table 5, the nominal packet padding value is a value corresponding to the row.

**Table 5 PPE thresholds of a PPET8 and a PPET16 (PE thresholds per PPET8 and PPET16)**

| Condition 1 | Condition 2 | Nominal packet padding value |
|---|---|---|
| Result of comparison between a constellation index x of an HE PPDU with an NSTS value of n and an RU allocation index=(b+DCM) and a PPET8 NSTSn RU(b+DCM) subfield (Result of comparison of the constellation index x of an HE PPDU with NSTS value n and RU allocation size that corresponds to the RU Allocation index=(b+DCM) to the value in the PPET8 NSTSn RU(b+DCM) subfield) | Result of comparison between a constellation index x of an HE PPDU with an NSTS value of n and an RU allocation index=(b+DCM) and a PPET16 NSTSn RU(b+DCM) subfield (Result of comparison of the constellation index x of an HE PPDU with NSTS value n and RU allocation size that corresponds to the RU Allocation index=value (b+DCM) to the value in the PPET16 NSTSn RU(b+DCM) subfield) | The HE PPDU uses a nominal packet padding value corresponding to the constellation index=x, NSTS=n, and RU allocation index=(b+DCM) (Nominal packet padding for an HE PPDU transmitted to this STA using the constellation index=x, NSTS=n and RU allocation size that corresponds to the RU Allocation index=(b+DCM)) |
| x is greater than or equal to a modulation threshold indicated by a PPET8 (x greater than or equal to PPET8) | x is less than a modulation threshold indicated by a PPET16 or a PPET16 is set to none (x less than PPET16 or PPET16 equal to None) | 8 µs |
| x is greater than a modulation threshold indicated by a PPET8 or a PPET8 is set to none (x greater than PPET8 or PPET8 equal to None) | x is greater than or equal to a modulation threshold indicated by a PPET16 (x greater than or equal to PPET16) | 16 µs |
| All other combinations not listed in the table (All other combinations not otherwise listed in this table) | | 0 µs |
| Note: If the HE PPDU uses dual-carrier modulation (dual carrier modulation, DCM), DCM=1; | | |
| otherwise, DCM=0 (NOTE: DCM=1 if the HE PPDU uses DCM; DCM=0 otherwise) | | |

It should be noted that the modulation scheme in Table 5 refers to a modulation scheme based on the modulation scheme corresponding to RUb and with DCM being considered. "None" in Table 5 may be understood as that a corresponding condition is not considered. For example, if a PPET8 subfield is set to none, an indication of the PPET8 subfield is not used for determining the nominal packet padding value.

As shown in Table 5, if the result of comparison between the constellation index x corresponding to the modulation scheme used by the second device and the modulation threshold indicated by the PPET8 subfield meets the condition 1, and the result of comparison between the constellation index x corresponding to the modulation scheme used by the second device and the modulation threshold indicated by the PPET16 subfield meets the condition 2, the nominal packet padding value is a value corresponding to the condition 1 and the condition 2.

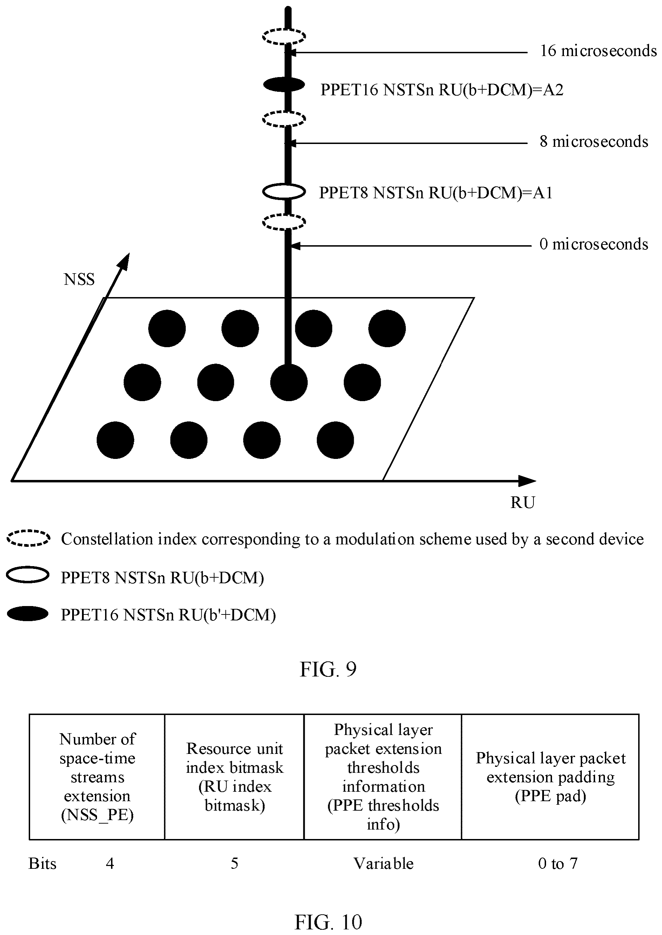

For ease of understanding, FIG. 9 shows how the second device determines the nominal packet padding value based on the constellation index x corresponding to the used modulation scheme, the modulation threshold (namely, A1) indicated by the PPET8 subfield, and the modulation threshold (namely, A2) indicated by the PPET16 subfield. In FIG. 9, a horizontal coordinate represents an RU, a vertical coordinate represents an NSS, and one dot in FIG. 9 corresponds to one NSS and corresponds to one RU/MRU. A dot in the second row and the third column in FIG. 9 is used as an example. If the constellation index x corresponding to the modulation scheme used by the second device is less than A1, the nominal packet padding value is 0 µs. If the constellation index x corresponding to the modulation scheme used by the second device is greater than or equal to A1, and the constellation index x corresponding to the modulation scheme used by the second device is less than A2, or the PPET16 subfield is set to none, the nominal packet padding value is 8 µs. If the constellation index x corresponding to the modulation scheme used by the second device is greater than A1 or the PPET8 is set to none, and the constellation index x corresponding to the modulation scheme used by the second device is greater than or equal to A2, the nominal packet padding value is 16 µs.

As a number of spatial streams supported by a device increases, modulation schemes increase, and a supported bandwidth increases, a larger nominal packet padding value needs to be indicated. For example, in 802.11be, a nominal packet padding value supporting 20 µs is proposed.

For the nominal packet padding value of 20 µs, a structure of the PPET thresholds field is shown in FIG. 10. The PPET thresholds field includes an NSS packet extension (NSS_PE) field, an RU index bitmask subfield, a PPE thresholds info field, and a PPE padding field. A difference from FIG. 7 lies in that the NSS_PE field indicates a number of space-time streams used to send the PPDU, and the NSS_PE field may occupy 4 bits. In this case, a value range of NSS_PE+1 is [1, ..., N], and N is equal to 16. The RU index bitmask subfield may occupy 5 bits. In this case, a maximum granularity of an RU indicated by the RU index bitmask subfield is 3*996. For another example, the RU index bitmask subfield may occupy 6 bits. In this case, a maximum granularity of an RU indicated by the RU index bitmask subfield is 4*996. Certainly, the RU index bitmask subfield may occupy more bits, and an RU size is 242+484, 484+996, 242+484+996, 2*996+484, 2*996+996, 3*996+484, or the like. In this case, a value range of b is [y, ..., m], where [y, ..., m] is a bit list formed by sequentially setting all bits set to 1 in the RU index bitmask subfield, and y is a least significant bit in the bit list. Table 6 is used as an example. All bits in the RU index bitmask subfield are set to 1, and the value range of b may be [0, ..., 4], that is, y is equal to 0, and m is equal to 4.

**Table 6**

| **RU allocation index** | **RU allocation size** |
|---|---|
| 0 | 242 |
| 1 | 484 |
| 2 | 242+484, 996 |
| 3 | 996+484, 2×996, 242+484+996 |
| 4 | 2×996+484,3×996,3×996+484,4×996 |

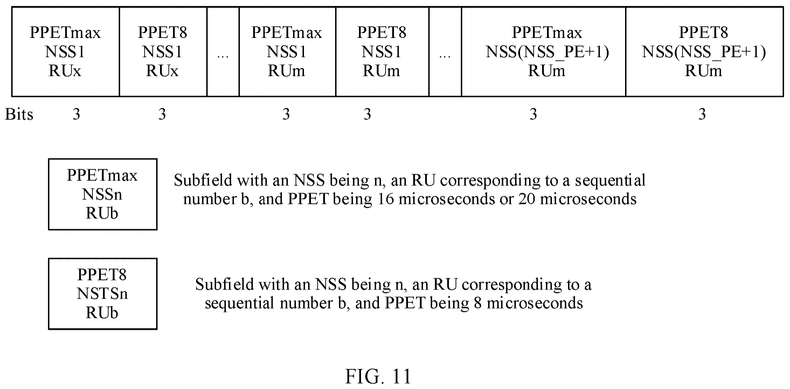

Correspondingly, in 802.11be, a structure of the PPE thresholds info field is shown in FIG. 11. PPET8 NSSn RUb subfields in FIG. 11 are subfields with an NSS being n, an RU corresponding to a sequence b, and PPET being 8 µs. PPETmax NSSn RUb subfields are subfields with an NSS being n, an RU corresponding to a sequence b, and PPET being 16 µs or 20 µs. The value of n traverses from 1 to NSS_PE+1, that is, n is an element in [1, ..., NSS_PE+1], and b traverses from y to m, where b=[y, ..., m].

Based on the PPE thresholds info field in FIG. 11, the second device may determine the nominal packet padding value according to Table 7. Similar to Table 5, if the result of comparison between the constellation index corresponding to the modulation scheme used by the second device and the modulation threshold indicated by the PPET8 NSTSn RUb subfields and the result of comparison between the constellation index corresponding to the modulation scheme used by the second device and the modulation threshold indicated by the PPETmax NSTSn RUb subfields meet a condition of a row in Table 7, the nominal packet padding value is a value corresponding to the row.

**Table 7 PPE thresholds of a PPET8 and a PPET16**

| Condition 1 | Condition 2 | Nominal packet padding value |
|---|---|---|
| Result of comparison between a constellation index x of an EHT PPDU with an NSS value of n and an RU allocation index=(b+DCM) and a PPET8 NSTSn RU(b+DCM) subfield (Result of comparison of the constellation index c of an EHT PPDU with NSS value n and RU allocation size that corresponds to the RU Allocation index=(b+DCM) to the value in the PPET8 NSTSn RU(b+DCM) value) | Result of comparison between a constellation index c of an EHT PPDU with an NSS value of n and an RU allocation index=(b+DCM) and a PPETmax NSTSn RU(b+DCM) subfield (Result of comparison of the constellation index x of an HE PPDU with NSS value n and RU allocation size that corresponds to the RU Allocation index=value (b+DCM) to the value in the PPETmax NSTSn RU(b+DCM) value) | The EHT PPDU uses a nominal packet padding value corresponding to the constellation index=c, NSS=n, and RU allocation index=(b+DCM) (Nominal packet padding for an EHT PPDU transmitted to this STA using the constellation index=x, NTS=n and RU allocation size that corresponds to the RU Allocation index=(b+DCM)) |
| c is greater than or equal to a modulation threshold indicated by a PPET8 (c greater than or equal to PPET8) | c is less than a modulation threshold indicated by a PPETmax or a PPETmax is set to none (c less than PPETmax or PPETmax equal to None) | 8 µs |
| c is greater than a modulation threshold indicated by a PPET8 or a PPET8 is set to none (c greater than PPET8 or PPET8 equal to None) | c is greater than or equal to a modulation threshold indicated by a PPETmax (c greater than or equal to PPETmax) | If c is less than or equal to 5 and b+DCM is less than or equal to 3, a corresponding nominal packet padding value is 16 µs (16µs if c≤5 and(b+DCM)≤3); or if c is equal to 6 and b+DCM is equal to 4, a corresponding nominal packet padding value is 20 µs (20µs if c=6 or (b+DCM)=4) |
| All other combinations not listed in the table (All other case with PPET8 and PPETmax values present) | | 0 µs |

As a bandwidth increases, channel quality of different space-time streams in a plurality of space-time streams varies. For example, channel quality of the first stream is good, and channel quality of another stream is poor. If a same modulation scheme is used on the plurality of space-time streams, a small signal-to-noise ratio (signal to noise ratio, SNR) needs to be adapted to, to meet a requirement of using a small modulation scheme. Therefore, different modulation schemes may be used on different space-time streams, so that an SNR of each space-time stream is large. There is no corresponding solution for how the transmitter determines the nominal packet extension time used when the receiver supports the transmitter in sending the PPDU to the receiver on a configured frequency domain resource or space-time stream by using a plurality of modulation schemes. Alternatively, there is no corresponding solution for how the receiver indicates the nominal packet padding value used when the receiver supports the transmitter in sending the PPDU to the receiver on a configured frequency domain resource or space-time stream by using a plurality of modulation schemes.

In embodiments of this application, that the transmitter uses the plurality of modulation schemes includes that the transmitter uses a plurality of modulation schemes on a plurality of space-time streams/spatial streams. For example, the transmitter uses BPSK on a first spatial stream, and uses 16-QAM on a second stream. That the transmitter uses the plurality of modulation schemes also includes using a plurality of modulation schemes on one or more RUs. For example, a first RU includes a first subcarrier set and a second subcarrier set, and the transmitter uses BPSK on the first subcarrier set and uses 16-QAM on the second subcarrier set. How the transmitter uses the plurality of modulation schemes is not limited in embodiments of this application.

That the transmitter sends the PPDU to the receiver by using one modulation scheme may be replaced with that the transmitter sends the PPDU to the receiver by using a same MCS. Similarly, that the transmitter sends the PPDU to the receiver by using the plurality of modulation schemes may be replaced with that the transmitter sends the PPDU to the receiver by using different MCSs. In other words, that the transmitter uses one modulation scheme may be understood as that the transmitter uses a same MCS. That the transmitter uses the plurality of modulation schemes may be understood as that the transmitter uses different MCSs. The "modulation scheme" in embodiments of this application may be replaced with an "MCS". In addition, in embodiments of this application, "different MCSs" include "different modulation schemes" and/or "different code rates".

That the receiver can support the transmitter in using the plurality of modulation schemes on the configured frequency domain resource or space-time stream may be considered as a capability of the receiver. This capability is related to the nominal packet padding value, and different capabilities may be associated with different nominal packet padding values. The receiver may notify the transmitter of the capability of the receiver, so that the transmitter may determine, based on the capability of the receiver, an adapted nominal packet padding value. That the receiver notifies the transmitter of the capability of the receiver may alternatively be understood as that the receiver indicates the nominal packet padding value to the transmitter based on capability information. In embodiments of this application, the nominal packet padding value may be indicated to the transmitter in a manner similar to the foregoing static indication manner, or the nominal packet padding value may be indicated to the transmitter in a manner similar to the foregoing dynamic indication manner.

The technical solutions provided in embodiments of this application are described below in detail with reference to the accompanying drawings.

A communication method provided in embodiments of this application relates to interaction between two communication apparatuses. The two communication apparatuses are, for example, a first device and a second device. For example, the first device is a receiver, and the second device is a transmitter. The first device may indicate, to the second device, a nominal packet padding value that needs to be used by the second device to send a physical layer data packet to the first device. The second device determines nominal packet extension time based on the nominal packet padding value indicated by the first device, and sends the physical layer data packet to the first device. Steps performed by the first device may be implemented by the first device, or may be implemented by components (for example, modules such as a chip, a processing unit, or a processor) in the first device. For example, the first device may be the station 1 in FIG. 1, or may be a chip (system) in the station 1 in FIG. 1. Steps performed by the second device may be implemented by the second device, or may be implemented by components (for example, modules such as a chip, a processing unit, or a processor) in the second device. The second device may be the AP shown in FIG. 1, or may be a chip (system) in the AP in FIG. 1.

In embodiments of this application, both "when", "it is assumed that", and "if" mean that an apparatus performs corresponding processing in an objective situation, but do not constitute a limitation on time, do not require that the apparatus has a determining action during implementation, or do not mean other limitations either. "If" and "it is assumed that" may be interchangeable, and unless otherwise specified, "when" and "in a case in which..." may be interchangeable. Steps shown by dashed lines in flowcharts in embodiments of this application are optional steps, that is, steps that may not be performed.

In embodiments of this application, that the second device uses at least two modulation schemes means that the second device sends a PPDU to the first device by using the at least two modulation schemes. In addition, nominal packet padding values in embodiments of this application include a plurality of values that increase sequentially. For example, the nominal packet padding values may include four values: 0 µs, 8 µs, 16 µs, and 20 µs. Certainly, the nominal packet padding values may further include more values, for example, a nominal packet padding value of 24 µs or 28 µs.

In embodiments of this application, an "NSTS" may be replaced with an "NSS". For example, "PPET8 NSTSn RUb subfields" may be replaced with "PPET8 NSSn RUb subfields", "PPET16 NSTSn RUb subfields" may be replaced with "PPET16 NSSn RUb subfields", and "PPETmax NSTSn RUb subfields" may be replaced with "PPETmax NSSn RUb subfields". "PPET16 NSTSn RUb subfields" may be replaced with "PPETmax NSTSn RUb subfields". In embodiments of this application, "*" and "×" in the formula may be replaced with each other.

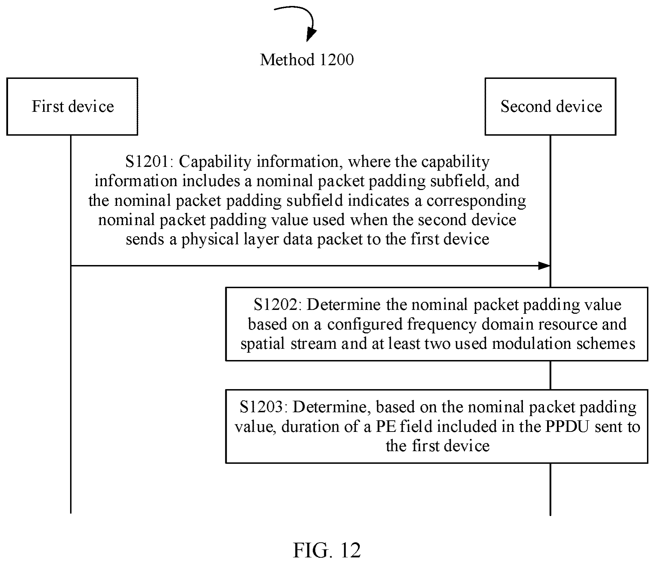

FIG. 12 shows a first capability indication method in a wireless local area network according to an embodiment of this application. A method 1200 shown in FIG. 12 is applicable to the scenario shown in FIG. 1. For example, a first device may be the station 1 in FIG. 1, and a second device may be the AP in FIG. 1. In the method 1200, the first device may indicate, to the second device based on a nominal packet padding subfield, a nominal packet padding value that needs to be used by the second device when sending a physical layer data packet to the first device. The method 1200 includes the following steps.

S1201: The first device sends capability information to the second device, and correspondingly, the second device receives the capability information, where the capability information includes the nominal packet padding subfield, and the nominal packet padding subfield indicates the corresponding nominal packet padding value used when the second device sends the PPDU to the first device.

The capability information may indicate the nominal packet padding value used by the second device when sending the physical layer data packet to the first device. For example, the capability information includes the nominal packet padding subfield, and the nominal packet padding subfield indicates the corresponding nominal packet padding value used when the second device sends the PPDU to the first device. Optionally, the capability information further includes a physical layer packet extension thresholds present subfield, the nominal packet padding subfield indicates the corresponding nominal packet padding value used when the second device sends the PPDU to the first device, and a value of the physical layer packet extension thresholds present subfield is 0. Alternatively, when a value of the physical layer packet extension thresholds present subfield is 1, the nominal packet padding subfield indicates the corresponding nominal packet padding value used when the second device sends the PPDU to the first device.

The capability information may be included in the physical layer data packet, for example, the PPDU, sent by the first device to the second device. For example, the capability information may be carried in a physical layer capabilities information field. For details, refer to the related content in FIG. 4 to FIG. 6. Details are not described herein again.

In the method 1200, the nominal packet padding value is for all NSSs and all RU allocations that the first device supports, and for at least two modulation schemes used by the second device on a configured frequency domain resource or a configured spatial stream. In this embodiment of this application, that the second device uses two modulation schemes means that constellation indexes corresponding to the modulation schemes used by the second device include at least two constellation indexes, or that the second device uses modulation schemes corresponding to at least two constellation indexes.

The following uses a plurality of cases as examples to describe how the nominal packet padding subfield indicates the nominal packet padding value used by the second device when the second device uses the at least two modulation schemes. Case 1 to Case 3 in the following are for all NSSs and all RU allocations.

Case 1: When a nominal packet padding value used by the second device to send the PPDU to the first device by using one modulation scheme is a first nominal packet padding value, a nominal packet padding value used by the second device when sending the PPDU to the first device by using the at least two modulation schemes may be considered as a second nominal packet padding value by default. A level of the second nominal packet padding value is higher than a level of the first nominal packet padding value. For example, the level of the second nominal packet padding value is one level higher than that of the first nominal packet padding value. For example, the first nominal packet padding value is 0 µs, and the second nominal packet padding value is 8 µs; or the first nominal packet padding value is 8 µs, and the second nominal packet padding value is 16 µs. Alternatively, the first nominal packet padding value is 16 µs, and the second nominal packet padding value is 20 µs. The rest may be deduced by analogy.

For Case 1, a mapping relationship between at least one status value of the nominal packet padding subfield and at least one nominal packet padding value may be defined, so that the first device indicates, based on the status value of the nominal packet padding subfield, the nominal packet padding value used by the second device. For example, the nominal packet padding value indicated by the nominal packet padding subfield is shown in Table 8.

**Table 8 Nominal packet padding subfield (nominal packet padding subfield)**

| Subfield | Definition | Meaning |
|---|---|---|
| Nominal packet padding subfield | If a PPE thresholds present subfield indicates 0, the nominal packet padding subfield indicates a nominal packet padding value, and the value is the same for all modulation schemes, numbers of spatial streams (number of spatial streams, NSS), and resource unit (resource unit, RU) allocations. (Indicates the nominal packet padding to be used for all constellations, NSS and RU allocations the STA supports if the PPE Thresholds Present subfield is set to 0.) | If the nominal packet padding value is **8 µs** for all constellations, NSSs, and RU allocations that the STA supports, the nominal packet padding subfield is set to 0. (Set to 0 if the nominal packet padding is 8 µs for all constellations, NSS and RU allocations the STA supports.) |
| | | If the nominal packet padding value is **16 µs** for all constellations, NSSs, and RU allocations that the STA supports, the nominal packet padding subfield is set to 1. (Set to 1 if the nominal packet padding is 8 µs for all constellations, NSS and RU allocations the STA supports.) |
| | | If the nominal packet padding value is **20 µs** for all constellations, NSSs, and RU allocations that the STA supports, the nominal packet padding subfield is set to 2. (Set to 2 if the nominal packet padding is 16 µs for all constellations, NSS and RU allocations the STA supports.) |

As shown in Table 8, the status value of the nominal packet padding subfield is 0, and the nominal packet padding value is 8 µs; the status value of the nominal packet padding subfield is 1, and the nominal packet padding value is 16 µs; or the status value of the nominal packet padding subfield is 2, and the nominal packet padding value is 20 µs.

It should be noted that, in comparison with Table 2, an example in which the level of the second nominal packet padding value is one level higher than that of the first nominal packet padding value is used in Table 8. A relationship between the second nominal packet padding value and the first nominal packet padding value is not limited in this embodiment of this application. For example, the second nominal packet padding value may be a sum of the first nominal packet padding value and a fixed value.

It should be noted that the mapping relationship between the status value of the nominal packet padding subfield and the nominal packet padding value in the foregoing example is merely an example. A specific mapping relationship between the status value of the nominal packet padding subfield and the value of the nominal packet padding value is not limited in this embodiment of this application. For example, the status value of the nominal packet padding subfield is a first status value, and the nominal packet padding value is a first microsecond. Specific values of the first status value and the first microsecond are not limited in this embodiment of this application. For example, the first status value is 2 or another possible value, and the first microsecond may be 24 µs, 28 µs, or the like.

**Case 2:** When the first device supports the second device in sending the PPDU to the first device by using the at least two modulation schemes, the nominal packet padding value used by the second device is related to a highest-order modulation scheme (for example, referred to as a first modulation scheme) in the at least two modulation schemes by default. For example, the nominal packet padding value used by the second device is related to one or more of the following: the first modulation scheme, a size of a frequency domain resource corresponding to the first modulation scheme, an NSS/NSTS corresponding to the first modulation scheme, or the like. The frequency domain resource corresponding to the first modulation scheme may be an RU or an MRU. The frequency domain resource corresponding to the first modulation scheme may be understood as using the first modulation scheme on the frequency domain resource.

In Case 2, the design of the nominal packet padding subfield whose status value is 3 in 802.11be may be used. For example, when the status value of the nominal packet padding subfield is 3, a constellation index corresponding to the first modulation scheme is less than or equal to a constellation index threshold, and one or more of the following conditions are met, the nominal packet padding value is 16 µs; otherwise, the nominal packet padding value is 20 µs:
(1) an RU/MRU allocation size is less than or equal to a size threshold;
(2) a size of an RU/MRU corresponding to the first modulation scheme is less than or equal to a size threshold; or
(3) an NSS is less than or equal to an NSS threshold.

The constellation index threshold, the size threshold, and the NSS threshold may be predefined or (pre)configured. For example, the constellation index threshold may be 1024-QAM, the size threshold may be 2*996-tone, and the NSS threshold may be 8 or 16.

For ease of understanding, the following uses a specific example to describe how the nominal packet padding subfield indicates the nominal packet padding value. It should be noted that, in the following example, the status value of the nominal packet padding value is 3. In some embodiments, the status value of the nominal packet padding value may alternatively be another value.

Example 1: It may be specified that when the status value of the nominal packet padding subfield is 3, the constellation index corresponding to the first modulation scheme in the at least two modulation schemes configured for the second device is less than or equal to the constellation index threshold, and the RU/MRU allocation size is less than or equal to the size threshold, the nominal packet padding value is 16 µs; otherwise, the nominal packet padding value is 20 µs.

Example 2: It may be specified that when the status value of the nominal packet padding subfield is 3, the constellation index corresponding to the first modulation scheme in the at least two modulation schemes configured for the second device is less than or equal to the constellation index threshold, the configured NSS is less than or equal to the NSS threshold, and the RU/MRU allocation size is less than or equal to the size threshold, the nominal packet padding value is 16 µs; otherwise, the nominal packet padding value is 20 µs.

Example 3: It may be specified that when the status value of the nominal packet padding subfield is 3, the constellation index corresponding to the first modulation scheme in the at least two modulation schemes configured for the second device is less than or equal to the constellation index threshold, and the size of the RU/MRU corresponding to the first modulation scheme is less than or equal to the size threshold, the nominal packet padding value is 16 µs; otherwise, the nominal packet padding value is 20 µs.

Example 4: It may be specified that when the status value of the nominal packet padding subfield is 3, the constellation index corresponding to the first modulation scheme in the at least two modulation schemes configured for the second device is less than or equal to the constellation index threshold, the configured NSS is less than or equal to the NSS threshold, and the size of the RU/MRU corresponding to the first modulation scheme is less than or equal to the size threshold, the nominal packet padding value is 16 µs; otherwise, the nominal packet padding value is 20 µs.

In the foregoing examples 1 to 4, constellation index thresholds in different examples may be the same or may be different; size thresholds in different examples may be the same or may be different; and NSS thresholds in different examples may be the same or may be different.

The second device may use different modulation schemes on different spatial streams, or use different modulation schemes on different subcarrier sets. It may be understood that the second device sends the PPDU by using the at least two modulation schemes (for example, a modulation scheme 1 and a modulation scheme 2), and the PPDU includes both content modulated by using the modulation scheme 1 and content modulated by using the modulation scheme 2. In this case, a larger nominal packet padding value is preferred. Accordingly, the constellation index threshold should correspond to the larger nominal packet padding value, the RU allocation index should correspond to the larger nominal packet padding value, or the NSS should correspond to the larger nominal packet padding value. Alternatively, in this case, one or more of the following should be selected: a smaller constellation index threshold, a PPET corresponding to a larger RU allocation index, or PPETs corresponding to more NSSs.

For example, when the second device sends the PPDU to the first device by using one modulation scheme, as shown in Table 7, if the status value of the nominal packet padding subfield is 3, a constellation index corresponding to the modulation scheme used by the second device is less than or equal to 5 (namely, a constellation index threshold), and the RU allocation size is less than or equal to 2×996-tone (namely, a size threshold), the nominal packet padding value is 16 µs; otherwise, the nominal packet padding value is 20 µs. However, in this embodiment of this application, when the second device sends the PPDU to the first device by using the at least two modulation schemes, the constellation index threshold may be less than 5. For example, the constellation index threshold is equal to 4. Similarly, the RU/MRU size threshold may be less than 2×996-tone (the corresponding RU allocation index is 3). For example, the RU/MRU size threshold may be 484-tone, that is, the RU allocation index is equal to 2.

Alternatively, although processing complexity increases due to the second device using the at least two modulation schemes, a low-order modulation scheme is used on some spatial streams, and a high-order modulation scheme is used on the other spatial streams; or a low-order modulation scheme is used on some subcarrier sets, and a high-order modulation scheme is used on the other subcarrier sets. In comparison with a case in which the second device uses a high-order modulation scheme on all spatial streams or all subcarrier sets, the second device processes fewer bits per unit time when using the at least two modulation schemes, and therefore, the first device can more quickly complete receiving of the PPDU sent by the second device. In this case, a smaller nominal packet padding value is preferred. Accordingly, the constellation index threshold should correspond to the smaller nominal packet padding value, the RU allocation index should correspond to the smaller nominal packet padding value, or the NSS should correspond to the smaller nominal packet padding value. Alternatively, in this case, one or more of the following should be selected: a larger constellation index threshold, a PPET corresponding to a smaller RU allocation index, or PPETs corresponding to fewer NSSs.

For example, when the second device sends the PPDU to the first device by using one modulation scheme, as shown in Table 7, if the status value of the nominal packet padding subfield is 3, the constellation index corresponding to the modulation scheme is less than or equal to 5 (namely, the constellation index threshold), and the RU allocation size is less than or equal to 2*996-tone (namely, the size threshold), the nominal packet padding value is 16 µs; otherwise, the nominal packet padding value is 20 µs. However, in this embodiment of this application, when the second device sends the PPDU to the first device by using the at least two modulation schemes, the constellation index threshold may be greater than 5. For example, the constellation index threshold is equal to 6. Similarly, the RU/MRU size threshold may be greater than 2×996-tone. For example, the RU/MRU size threshold may be 4×996-tone, that is, the RU allocation index is equal to 4.

**Case 3:** When the first device supports the second device in sending the PPDU to the first device by using the at least two modulation schemes, the nominal packet padding value used by the second device may be 20 µs by default.

In this case, a status value of the nominal packet padding subfield corresponding to the nominal packet padding value of 20 µs may be defined, for example, the status value is 2. When the status value of the nominal packet padding subfield is 2, the second device may determine that the nominal packet padding value indicated by the first device is 20 µs.

Alternatively, the meaning of the status value 3 of the nominal packet padding subfield is still used. In other words, when an order of the modulation scheme supported by the second device is less than 1024, and the RU/MRU allocation size is less than or equal to 2×996-tone, the nominal packet padding value is 16 µs; otherwise, the nominal packet padding value is 20 µs. "Otherwise, the nominal packet padding value is 20 µs" includes a case in which the second device sends the PPDU to the first device by using the at least two MCSs. In other words, if the second device sends the PPDU to the first device by using the at least two modulation schemes, the value of the physical layer packet extension thresholds present subfield included in the PPDU sent by the first device to the second device is 0, and the status value of the nominal packet padding subfield is 3, the nominal packet padding value indicated by the nominal packet padding subfield is 20 µs.

S1202: The second device determines the nominal packet padding value based on a configured frequency domain resource and spatial stream and the at least two used modulation schemes.

Resources, for example, the frequency resource and the spatial stream, used to send the PPDU to the first device may be configured for the second device. The frequency domain resource may be used to allocate an RU/MRU to the second device. Information about the frequency domain resource and information about the spatial stream may be carried in same configuration information and sent to the second device together, or may be separately sent to the second device.

The second device may determine the nominal packet padding value based on the configured frequency domain resource and spatial stream and the at least two used modulation schemes. For example, when sending the PPDU to the first device by using the at least two modulation schemes, the second device may determine a corresponding nominal packet padding value or a default nominal packet padding value based on the status value indicated by the nominal packet padding subfield in the capability information.

For example, a meaning of the nominal packet padding subfield is the same as that in Case 1. In this case, provided that the second device uses the at least two modulation schemes, when the status value of the nominal packet padding subfield is 0, the second device determines that the nominal packet padding value is 8 µs; when the status value of the nominal packet padding subfield is 1, the second device determines that the nominal packet padding value is 16 µs; or when the status value of the nominal packet padding subfield is 2, the second device determines that the nominal packet padding value is 20 µs.

If a meaning of the nominal packet padding subfield is the same as that in Case 2, when the status value of the nominal packet padding subfield is 3, the constellation index corresponding to the first modulation scheme in the at least two modulation schemes used by the second device is less than or equal to the constellation index threshold, and the RU/MRU allocation size is less than or equal to the size threshold, the nominal packet padding value is 16 µs; otherwise, the nominal packet padding value is 20 µs; or when the status value of the nominal packet padding subfield is 3, the constellation index corresponding to the first modulation scheme in the at least two modulation schemes used by the second device is less than or equal to the constellation index threshold, the configured NSS is less than or equal to the NSS threshold, and the RU/MRU allocation size is less than or equal to the size threshold, the nominal packet padding value is 16 µs; otherwise, the nominal packet padding value is 20 µs; or when the status value of the nominal packet padding subfield is 3, the constellation index corresponding to the first modulation scheme in the at least two modulation schemes used by the second device is less than or equal to the constellation index threshold, and the size of the RU/MRU corresponding to the first modulation scheme is less than or equal to the size threshold, the nominal packet padding value is 16 µs; otherwise, the nominal packet padding value is 20 µs; or when the status value of the nominal packet padding subfield is 3, the constellation index corresponding to the first modulation scheme in the at least two modulation schemes used by the second device is less than or equal to the constellation index threshold, the configured NSS is less than or equal to the NSS threshold, and the size of the RU/MRU corresponding to the first modulation scheme is less than or equal to the size threshold, the nominal packet padding value is 16 µs; otherwise, the nominal packet padding value is 20 µs.

If a meaning of the nominal packet padding subfield is the same as that in Case 3, when the status value of the nominal packet padding subfield is 3, the nominal packet padding value is 20 µs, provided that the second device uses the at least two modulation schemes.

S1203: The second device determines, based on the nominal packet padding value, duration of a PE field included in the PPDU sent to the first device.

After determining the nominal packet padding value, the second device determines, based on the nominal packet padding value, the duration of the PE field included in the PPDU sent to the first device. The duration of the PE field enables the first device to have enough time to parse the PPDU received from the second device. For determining, by the second device, the duration of the PE field based on the nominal packet padding value, refer to related content in Table 1 and FIG. 3. Details are not described herein again.

The method 1200 shows the solution in which the first device indicates the nominal packet padding value based on the nominal packet padding subfield for all NSSs and all RU allocations that the first device supports, and for the first device supporting the second device in using the at least two modulation schemes on the configured frequency domain resource or the configured spatial stream. According to the method 1200, when the second device sends the PPDU to the first device by using the at least two modulation schemes, the duration of the PE field included in the PPDU is determined, to enable the first device to have enough time to parse the PPDU received from the second device.

It may be understood that the nominal packet padding subfield may also indicate a nominal packet padding value corresponding to all NSSs, all RU allocations, and one modulation scheme that the first device supports. In a possible implementation, to reduce overheads, a number of bits occupied by the nominal packet padding subfield does not need to be increased. In this case, the second device may determine a meaning of the nominal packet padding subfield based on one modulation scheme or at least two modulation schemes used to send the PPDU to the first device. Alternatively, excess bit information may indicate that a meaning of the nominal packet padding subfield corresponds to one modulation scheme or at least two modulation schemes.

As described above, alternatively, the first device may indirectly indicate the nominal packet padding value based on the physical layer packet extension thresholds present subfield and the physical layer packet extension thresholds field. Details are described below.

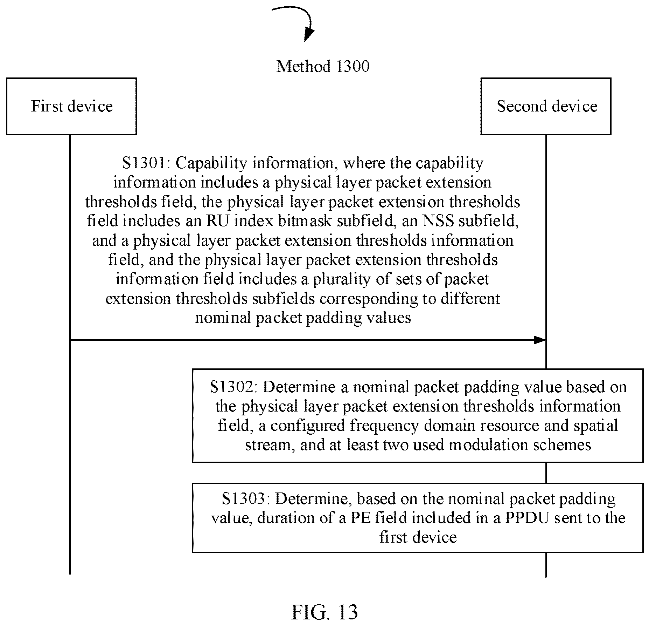

FIG. 13 shows a second capability indication method in a wireless local area network according to an embodiment of this application. A method 1300 shown in FIG. 13 is applicable to the scenario shown in FIG. 1. For example, a first device may be the station 1 in FIG. 1, and a second device may be the AP in FIG. 1. In the method 1300, the first device indirectly indicates, based on a physical layer packet extension thresholds present subfield and a physical layer packet extension thresholds field, a nominal packet padding value that needs to be used by the second device to send a PPDU to the first device by using at least two MCSs. The method 1300 includes the following steps.

S1301: The first device sends capability information to the second device, and correspondingly, the second device receives the capability information, where the capability information includes the physical layer packet extension thresholds field, the physical layer packet extension thresholds field includes an RU index bitmask subfield, an NSS subfield, and a physical layer packet extension thresholds information field, and the physical layer packet extension thresholds information field includes a plurality of sets of packet extension thresholds subfields corresponding to different nominal packet padding values.

Optionally, the capability information further includes the physical layer packet extension thresholds present subfield. When a value of the physical layer packet extension thresholds present subfield is 1, the physical layer packet extension thresholds information field includes a plurality of sets of packet extension thresholds subfields corresponding to different nominal packet padding values. Alternatively, when the physical layer packet extension thresholds information field includes a plurality of sets of packet extension thresholds subfields corresponding to different nominal packet padding values, a value of the physical layer packet extension thresholds present subfield is 1.

The capability information may be included in a physical layer data packet, for example, the PPDU, sent by the first device to the second device. For example, the capability information may be carried in a physical layer capabilities information field. For details, refer to the related content in FIG. 7, FIG. 8, FIG. 9, and FIG. 10. Details are not described herein again.

In some embodiments, a design of the physical layer packet extension thresholds field may be the same as the design of the physical layer packet extension thresholds field in 802.11be. For example, the physical layer packet extension thresholds field includes the RU index bitmask subfield, the NSS subfield, and the physical layer packet extension thresholds information field, and the physical layer packet extension thresholds information field includes the plurality of sets of packet extension thresholds subfields corresponding to different nominal packet padding values. For example, the physical layer packet extension thresholds information field includes a first set of packet extension thresholds subfields corresponding to a first nominal packet padding value and a second set of packet extension thresholds subfields corresponding to a second nominal packet padding value. Optionally, the first nominal packet padding value may be 8 µs, and the second nominal packet padding value may be 16 µs or 20 µs. In this case, the first set of packet extension thresholds subfields may be PPET8 NSTSn RUb subfields, and the second set of packet extension thresholds subfields may be PPETmax NSTSn RUb subfields. In other words, the physical layer packet extension thresholds information field includes the PPET8 NSTSn RUb subfields and the PPETmax NSTSn RUb subfields. For details, refer to related content in FIG. 10. Details are not described herein again.

In the method 1300, each set of packet extension thresholds subfields indicates a modulation threshold corresponding to an NSS being n and an RU/MRU corresponding to a sequential number b, and the modulation threshold is used by the second device to determine the nominal packet padding value used to send the physical layer data packet to the first device. The nominal packet padding value is for the first device supporting the second device in using the at least two modulation schemes when the configured NSS is n and the RU/MRU corresponds to the sequential number b. A value range of n is a subset of [N1, ..., N2], both N1 and N2 are integers greater than or equal to 1, a value range of b is a subset of [M1, ..., M2], and both M1 and M2 are integers greater than or equal to 0.

When the first device supports the second device in using the at least two modulation schemes, one or more of the following may be specified: a relationship between an NSS corresponding to the modulation threshold indicated by each set of packet extension thresholds subfields and an NSS configured for the second device, a relationship between an RU/MRU corresponding to the modulation threshold indicated by each set of packet extension thresholds subfields and an RU/MRU configured for the second device, or a result of comparison between the modulation threshold indicated by each set of packet extension thresholds subfields and a constellation index, so that the second device determines, based on the plurality of sets of packet extension thresholds subfields corresponding to a plurality of nominal packet padding values, the nominal packet padding value indicated by the first device.

For ease of understanding, the following uses specific examples for description.

Example 1: When the second device is configured to use the at least two modulation schemes, the nominal packet padding value is determined by default based on a result of comparison between a constellation index corresponding to a second modulation scheme and the modulation threshold indicated by each set of packet extension thresholds subfields. The constellation index of the second modulation scheme may be a sum of a constellation index corresponding to a highest-order modulation scheme (for example, referred to as a first modulation scheme) in the at least two modulation schemes and a first value. For example, the second device may determine the nominal packet padding value based on a result of comparison between the constellation index corresponding to the second modulation scheme and a modulation threshold indicated by the PPET8 NSTSn RUb subfields, and a result of comparison between the constellation index corresponding to the second modulation scheme and a modulation threshold indicated by the PPETmax NSTSn RUb subfields. For details, refer to related content in Table 5 or Table 7.

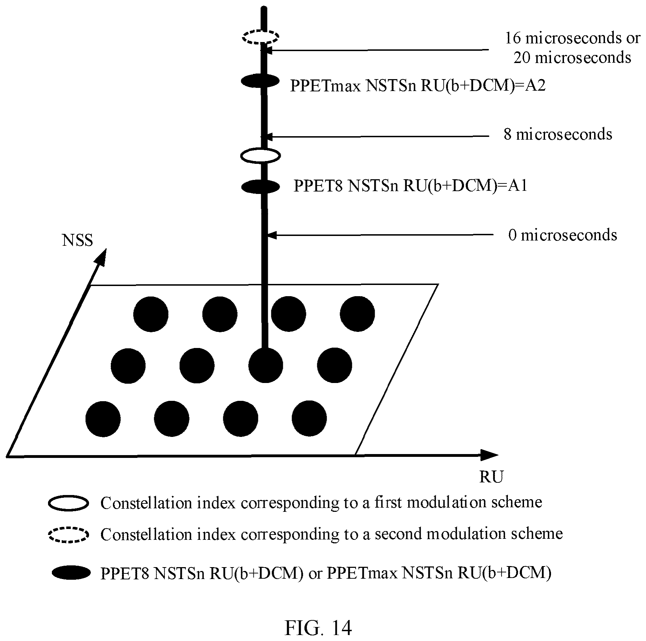

For ease of understanding, FIG. 14 shows a principle of determining a nominal packet padding value. One dot in FIG. 14 corresponds to one NSS and corresponds to one RU/MRU. The first modulation scheme is the highest-order modulation scheme in the at least two modulation schemes configured for the second device. The constellation index corresponding to the second modulation scheme is the sum of the constellation index corresponding to the first modulation scheme and the first value. In addition, if the first value is a positive number, a dot in the second row and the third column in FIG. 14 is used as an example, the constellation index corresponding to the first modulation scheme is greater than A1 and less than A2, and the nominal packet padding value is determined based on a result of comparison between the constellation index corresponding to the first modulation scheme and A1 and between the constellation index corresponding to the first modulation scheme and A2, the nominal packet padding value is 8 µs. However, in this embodiment of this application, the nominal packet padding value is determined based on the result of comparison between the constellation index corresponding to the second modulation scheme and A1 and between the constellation index corresponding to the second modulation scheme and A2. In this case, the constellation index corresponding to the second modulation scheme is greater than A1 and greater than A2, and correspondingly, the nominal packet padding value is 16 µs or 20 µs.

It may be understood that the first value is not equal to 0, and a specific value of the first value is not limited in this embodiment of this application. As described above, the second device sends the PPDU to the first device by using the at least two modulation schemes, which increases processing complexity. In this case, a constellation index threshold corresponding to a larger nominal packet padding value may be selected. In other words, the first value is a negative number. For example, the first value may be -1, -2, or -3. The second device sends the PPDU to the first device by using the at least two modulation schemes. In this case, a number of bits processed per unit time is reduced, so that the first device can more quickly receive the PPDU from the second device. In this case, a constellation index threshold corresponding to a smaller nominal packet padding value may be selected. In other words, the first value is a positive number. For example, the first value may be 1, 2, or 3.

Example 2: In a set of packet extension thresholds subfields, a modulation threshold corresponding to an NSS being n and an RU/MRU corresponding to a sequential number b is a modulation threshold corresponding to an NSS being n and an RU/MRU corresponding to a sequential number b', b' is a sum of by and a second value, and the second value is not equal to 0.

Correspondingly, when the NSS configured for the second device is n, the sequential number corresponding to the RU/MRU is b, and the PPDU is sent to the first device by using the at least two modulation schemes, the second device may determine the nominal packet padding value based on a result of comparison between a constellation index corresponding to a modulation scheme (for example, referred to as a second modulation scheme) in the at least two modulation schemes and the modulation threshold corresponding to the NSS being n and the RU/MRU corresponding to the sequential number b'. The example in Table 7 is still used. The second device may determine the nominal packet padding value based on the result of comparison between the constellation index corresponding to the second modulation scheme and the modulation threshold indicated by the PPET8 NSTSn RUb subfields, and the result of comparison between the constellation index corresponding to the second modulation scheme and the modulation threshold indicated by the PPETmax NSTSn RUb subfields. The modulation threshold indicated by the PPET8 NSTSn RUb subfields is the modulation threshold corresponding to the NSS being n and the RU corresponding to the sequential number b'. The modulation threshold indicated by the PPETmax NSTSn RUb subfields is the modulation threshold corresponding to the NSS being n and the RU corresponding to the sequential number b'. For details, refer to the related content in Table 5 or Table 7. Details are not described herein again.

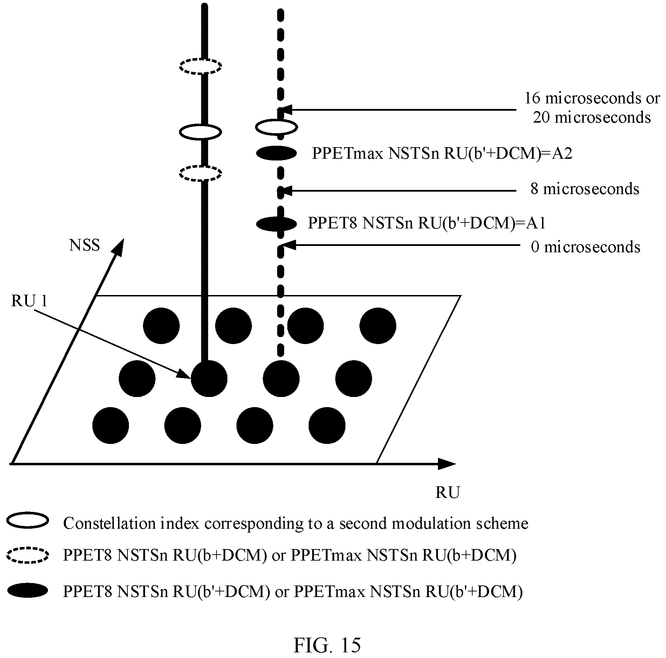

For ease of understanding, FIG. 15 shows a principle of determining a nominal packet padding value. One dot in FIG. 15 corresponds to one NSS and corresponds to one RU/MRU. A start sequential number of an RU on a horizontal coordinate shown in FIG. 15 may start from 0, or may start from 1. For example, a start sequential number of an RU on a horizontal coordinate shown in FIG. 15 starts from 0, and a dot in the second row and the second column is used as example. An RU 1 is an RU configured by the second device, and a sequential number of the RU 1 is 1. If the second value is 1, the second device may determine the nominal packet padding value based on a modulation threshold corresponding to an NSS being n and an RU corresponding to a sequential number 2. As shown in FIG. 15, if the second device determines the nominal packet padding value based on the result of comparison between the constellation index corresponding to the second modulation scheme and the modulation threshold indicated by the PPET8 NSTSn RUb subfields, and the result of comparison between the constellation index corresponding to the second modulation scheme and the modulation threshold indicated by the PPETmax NSTSn RUb subfields, the determined nominal packet padding value is 8 µs. However, in this embodiment of this application, based on the example 2, the second device determines the nominal packet padding value based on the result of comparison between the constellation index corresponding to the second modulation scheme and the modulation threshold indicated by the PPET8 NSTSn RUb' subfields, and the result of comparison between the constellation index corresponding to the second modulation scheme and the modulation threshold indicated by the PPETmax NSTSn RUb' subfields, the constellation index corresponding to the second modulation scheme is greater than A1 and greater than A2, and correspondingly, the nominal packet padding value is 16 µs or 20 µs.

It should be noted that the second modulation scheme in the example 2 may be a highest-order modulation scheme in the at least two modulation schemes, or may be a lowest-order modulation scheme in the at least two modulation schemes. Similar to that of the first value, a specific value of the second value is not limited in this embodiment of this application. For example, the second value may be a positive number, for example, 1, 2, or 3. Alternatively, the second value may be a negative number, for example, -1, -2, or -3.

Example 3: In a set of packet extension thresholds subfields, a modulation threshold corresponding to an NSS being n and an RU/MRU corresponding to a sequential number b is a modulation threshold corresponding to an NSS being n' and an RU/MRU corresponding to the sequential number b, n' is a sum of n and a third value, and the third value is not equal to 0.

Correspondingly, when the NSS configured for the second device is n, the sequential number corresponding to the RU/MRU is b, and the PPDU is sent to the first device by using the at least two modulation schemes, the second device may determine the nominal packet padding value based on a result of comparison between a constellation index corresponding to a modulation scheme (for example, referred to as a second modulation scheme) in the at least two modulation schemes and the modulation threshold corresponding to the NSS being n' and the RU/MRU corresponding to the sequential number b. The example in Table 7 is still used. The second device may determine the nominal packet padding value based on the result of comparison between the constellation index corresponding to the second modulation scheme and the modulation threshold indicated by the PPET8 NSTSn RUb subfields, and the result of comparison between the constellation index corresponding to the second modulation scheme and the modulation threshold indicated by the PPETmax NSTSn RUb subfields. The modulation threshold indicated by the PPET8 NSTSn RUb subfields is the modulation threshold corresponding to the NSS being n' and the RU corresponding to the sequential number b. The modulation threshold indicated by the PPETmax NSTSn RUb subfields is the modulation threshold corresponding to the NSS being n and the RU corresponding to the sequential number b. For details, refer to the related content in Table 5 or Table 7.

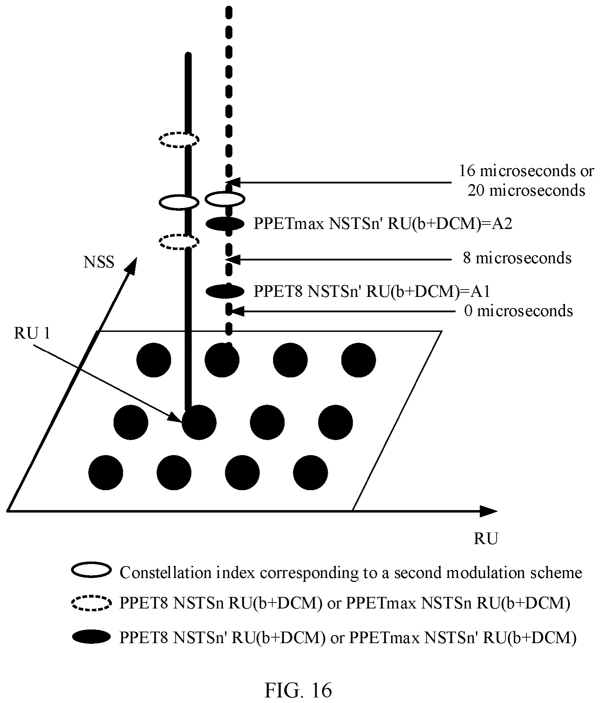

For ease of understanding, FIG. 16 shows a principle of determining a nominal packet padding value. One dot in FIG. 16 corresponds to one NSS and corresponds to one RU/MRU. A start sequential number of an RU on a horizontal coordinate shown in FIG. 16 may start from 0, or may start from 1. For example, a start sequential number of an RU on a horizontal coordinate shown in FIG. 16 starts from 0, and a dot in the second row and the second column is used as example. An RU 1 is an RU configured by the second device, a sequential number of the RU 1 is 1, and an NSS configured for the second device is a number of streams indicated by the second row, for example, n. If the sum of n and the third value is n', the second device may determine the nominal packet padding value based on a modulation threshold corresponding to an NSS being n' and an RU corresponding to a sequential number 1. As shown in FIG. 16, if the second device determines the nominal packet padding value based on the result of comparison between the constellation index corresponding to the second modulation scheme and the modulation threshold indicated by the PPET8 NSTSn RUb subfields, and the result of comparison between the constellation index corresponding to the second modulation scheme and the modulation threshold indicated by the PPETmax NSTSn RUb subfields, the determined nominal packet padding value is 8 µs. However, in this embodiment of this application, based on the example 3, the second device determines the nominal packet padding value based on the result of comparison between the constellation index corresponding to the second modulation scheme and the modulation threshold indicated by the PPET8 NSTSn' RUb subfields, and the result of comparison between the constellation index corresponding to the second modulation scheme and the modulation threshold indicated by the PPETmax NSTSn' RUb subfields, the constellation index corresponding to the second modulation scheme is greater than A1 and greater than A2, and correspondingly, the nominal packet padding value is 16 µs or 20 µs.

It should be noted that the second modulation scheme in the example 3 may be a highest-order modulation scheme in the at least two modulation schemes, or may be a lowest-order modulation scheme in the at least two modulation schemes. Similar to that of the first value, a specific value of the third value is not limited in this embodiment of this application. For example, the third value may be a positive number, for example, 1, 2, or 3. Alternatively, the third value may be a negative number, for example, -1, -2, or -3.

Example 4: When the second device uses the at least two modulation schemes, the nominal packet padding value corresponding to PPETmax NSTSn RUb subfields is greater than or equal to 20 µs by default.

A plurality of examples in the example 1 to the example 4 may be combined with each other. For example, the example 2 is combined with the example 3. In a set of packet extension thresholds subfields, a modulation threshold corresponding to an NSS being n and an RU/MRU corresponding to a sequential number b is a modulation threshold corresponding to an NSS being n' and an RU/MRU corresponding to the sequential number b', b' is a sum of b and the second value, and n' is a sum of n and the third value.

S1302: The second device determines the nominal packet padding value based on the physical layer packet extension thresholds information field, a configured frequency domain resource and spatial stream, and the at least two used modulation schemes.

The second device may compare, based on the configured frequency domain resource and spatial stream and a constellation index corresponding to one of the at least two used modulation schemes, modulation thresholds indicated by the plurality of packet extension thresholds subfields included in the physical layer packet extension thresholds information field, and determine the corresponding nominal packet padding value based on a result of comparison. For a specific manner of determining the nominal packet padding value by the second device, refer to related content in the example 1 to the example 4 in S1301. Details are not described herein again.

S1303: The second device determines, based on the nominal packet padding value, duration of a PE field included in the PPDU sent to the first device.

After determining the nominal packet padding value, the second device determines, based on the nominal packet padding value, the duration of the PE field included in the PPDU sent to the first device. The duration of the PE field enables the first device to have enough time to parse the PPDU received from the second device. For determining, by the second device, the duration of the PE field based on the nominal packet padding value, refer to related content in Table 1 and FIG. 3. Details are not described herein again.

The method 1300 shows the design of the physical layer packet extension thresholds field in 802.11be is still used to indicate the nominal packet padding value that needs to be used when the second device sends the PPDU to the first device by using the at least two modulation schemes. According to the method 1300, when the second device sends the PPDU to the first device by using the at least two modulation schemes, the duration of the PE field included in the PPDU is determined, to enable the first device to have enough time to parse the PPDU received from the second device.

It may be understood that the physical layer packet extension thresholds field in the method 1300 may also indicate a corresponding nominal packet padding value used when the first device supports one modulation scheme. In a possible implementation, to reduce overheads, a number of bits occupied by the physical layer packet extension thresholds field does not need to be increased. In this case, the second device may determine a meaning of the physical layer packet extension thresholds field based on one modulation scheme or at least two modulation schemes that is/are used. Alternatively, excess bit information may indicate that a meaning of the physical layer packet extension thresholds field corresponds to one modulation scheme or at least two modulation schemes.

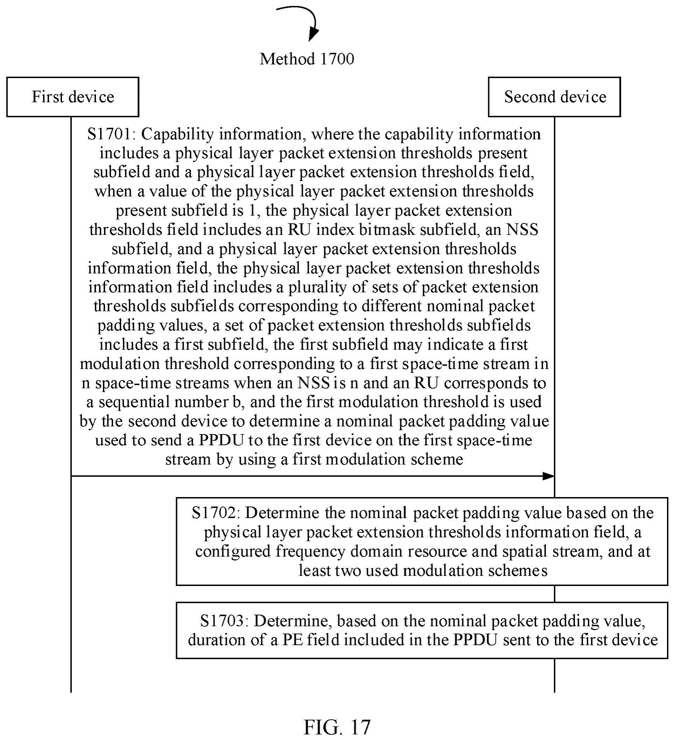

In a solution that may replace the method 1300, a corresponding modulation threshold may be indicated for each spatial stream. In this case, the second device may determine, based on modulation thresholds respectively corresponding to all spatial streams, a nominal packet padding value that needs to be used. Correspondingly, FIG. 17 shows a third solution according to an embodiment of this application.

A method 1700 shown in FIG. 17 is applicable to the scenario shown in FIG. 1. For example, a first device may be the station 1 in FIG. 1, and a second device may be the AP in FIG. 1. In the method 1700, the first device indicates, based on a physical layer packet extension thresholds present subfield and a physical layer packet extension thresholds field in a PPDU, a nominal packet padding value that needs to be used by the second device to send the PPDU to the first device by using at least two modulation schemes. In the method 1700, each set of packet extension thresholds subfields may be extended based on a number of spatial streams. For example, each set of packet extension thresholds subfields includes a plurality of subfields, and one subfield may indicate a modulation threshold corresponding to one of n space-time streams when an NSS is n and an RU corresponds to a sequential number b. For example, a set of packet extension thresholds subfields includes a first subfield and a second subfield. The first subfield may indicate a first modulation threshold corresponding to a first space-time stream in the n space-time streams when the NSS is n and the RU corresponds to the sequential number b, and the first modulation threshold is used by the second device to determine a corresponding nominal packet padding value used when sending the PPDU to the first device on the first space-time stream by using a first modulation scheme. Similarly, the second subfield may indicate a second modulation threshold corresponding to a second space-time stream in the n space-time streams when the NSS is n and the RU corresponds to the sequential number b, and the second modulation threshold is used by the second device to determine a corresponding nominal packet padding value used when sending the PPDU to the first device on the second space-time stream by using the second modulation scheme. A value range of n is a subset of [N1, ..., N2], both N1 and N2 are integers greater than or equal to 1, a value range of b is a subset of [M1, ..., M2], and both M1 and M2 are integers greater than or equal to 0.

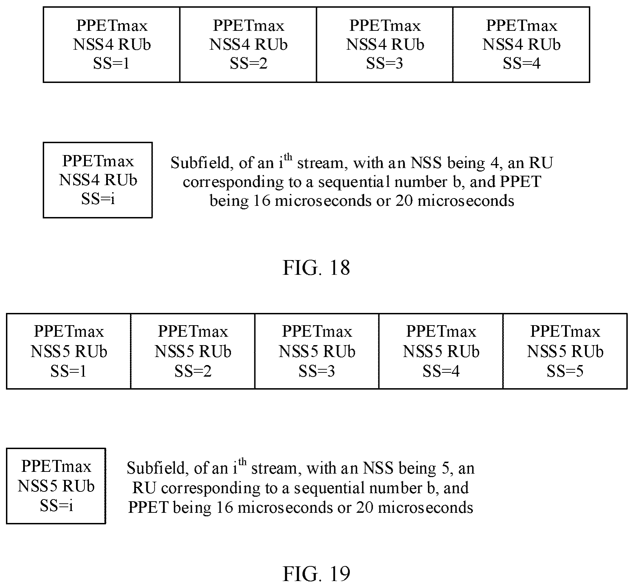

PPETmax NSSn RUb subfields are used as an example. When an NSS supported by the first device is 4, a structure of the PPETmax NSSn RUb subfields may be shown in FIG. 18. "PPETmax NSS4 RUb SS=i" in FIG. 18 is one subfield, where i=1, 2, 3, or 4. When the NSS supported by the first device is 5, a structure of the PPETmax NSSn RUb subfields may be shown in FIG. 19. "PPETmax NSS4 RUb SS=i" in FIG. 19 is one subfield, where i=1, 2, 3, 4, or 5.

Correspondingly, the method 1700 includes the following steps.

S1701: The first device sends capability information to the second device, and correspondingly, the second device receives the capability information, where the capability information includes the physical layer packet extension thresholds field, the physical layer packet extension thresholds field includes an RU index bitmask subfield, an NSS subfield, and a physical layer packet extension thresholds information field, and the physical layer packet extension thresholds information field includes a plurality of sets of packet extension thresholds subfields corresponding to different nominal packet padding values. Each set of packet extension thresholds subfields includes the first subfield, the first subfield may indicate the first modulation threshold corresponding to the first space-time stream in the n space-time streams when the NSS is n and the RU corresponds to the sequential number b, and the first modulation threshold is used by the second device to determine the corresponding nominal packet padding value used when sending the PPDU to the first device on the first space-time stream by using the first modulation scheme.

Each set of packet extension thresholds subfields further includes the second subfield that may indicate the second modulation threshold corresponding to the second space-time stream in the n space-time streams when the NSS is n and the RU corresponds to the sequential number b, and the second modulation threshold is used by the second device to determine the corresponding nominal packet padding value used when sending the PPDU to the first device on the second space-time stream by using the second modulation scheme.

The capability information may be included in a physical layer data packet, for example, the PPDU, sent by the first device to the second device. For example, the capability information may be carried in a physical layer capabilities information field. For details, refer to the related content in FIG. 7, FIG. 8, FIG. 9, and FIG. 10. Details are not described herein again. Optionally, the capability information further includes the physical layer packet extension thresholds present subfield. When a value of the physical layer packet extension thresholds present subfield is 1, the physical layer packet extension thresholds information field includes a plurality of sets of packet extension thresholds subfields corresponding to different nominal packet padding values. Alternatively, when the physical layer packet extension thresholds information field includes a plurality of sets of packet extension thresholds subfields corresponding to different nominal packet padding values, a value of the physical layer packet extension thresholds present subfield is 1.

S1702: The second device determines the nominal packet padding value based on the physical layer packet extension thresholds information field, a configured frequency domain resource and spatial stream, and the at least two used modulation schemes.

For any space-time stream corresponding to the NSS being n and the RU corresponding to the sequential number b, a corresponding nominal packet padding value may be determined based on a constellation index corresponding to a modulation scheme used on each space-time stream and a modulation threshold corresponding to the space-time stream. After determining nominal packet padding values respectively corresponding to n spatial streams, the second device determines, based on the nominal packet padding values respectively corresponding to the n spatial streams, the nominal packet padding value that needs to be used to send the PPDU to the first device. For example, the nominal packet padding value used by the second device is a maximum nominal packet padding value in the nominal packet padding values respectively used on the n space-time streams when the NSS is n and the RU corresponds to the sequential number b.

For a manner of determining the nominal packet padding value corresponding to any space-time stream, refer to the content in Table 5 or Table 7. Details are not described herein again.

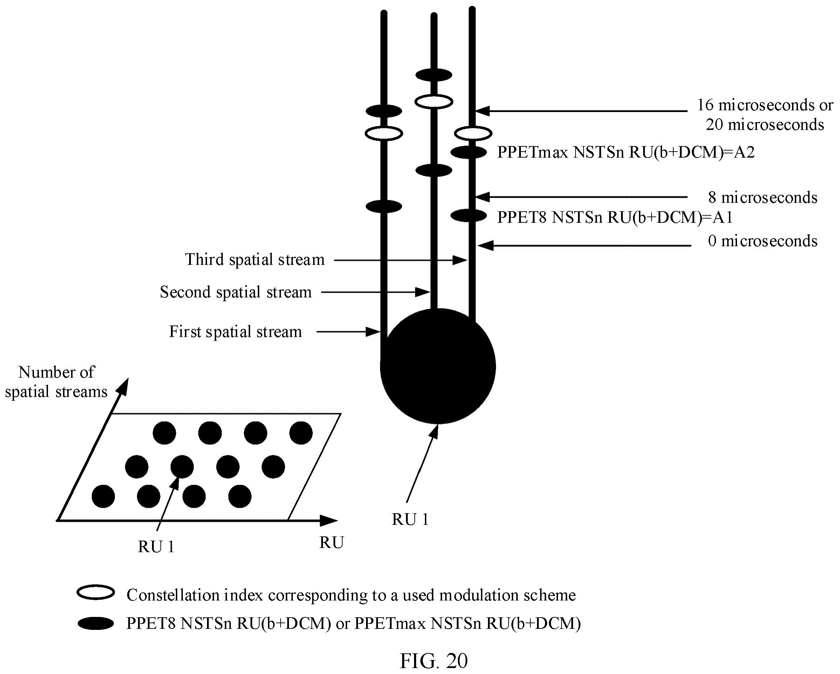

For ease of understanding, FIG. 20 shows a principle of determining a nominal packet padding value. One dot in FIG. 20 corresponds to one number of spatial streams and corresponds to one RU/MRU. In FIG. 20, three spatial streams are used as an example. An RU configured for the second device is an RU 1, and a sequential number corresponding to the RU is b. The second device sends the PPDU to the first device on a first spatial stream by using the first modulation scheme, on a second spatial stream by using the second modulation scheme, and on a third spatial stream by using the first modulation scheme. As shown in FIG. 20, the second device determines, based on a result of comparison between a constellation index corresponding to the first modulation scheme and a modulation threshold indicated by PPET8 NSTSn RUb subfields and between the constellation index corresponding to the first modulation scheme and a modulation threshold indicated by PPETmax NSTSn RUb subfields, a nominal packet padding value corresponding to the first spatial stream, and correspondingly, the constellation index corresponding to the first modulation scheme is greater than A1 and less than A2. In this case, the nominal packet padding value is 8 µs. The second device determines, based on a result of comparison between a constellation index corresponding to the second modulation scheme and the modulation threshold indicated by the PPET8 NSTSn RUb subfields and between the constellation index corresponding to the second modulation scheme and the modulation threshold indicated by the PPETmax NSTSn RUb subfields, a nominal packet padding value corresponding to the second spatial stream, and correspondingly, the constellation index corresponding to the second modulation scheme is greater than A1 and less than A2. In this case, the nominal packet padding value is 8 µs. The second device determines, based on a result of comparison between the constellation index corresponding to the first modulation scheme and the modulation threshold indicated by the PPET8 NSTSn RUb subfields and between the constellation index corresponding to the first modulation scheme and the modulation threshold indicated by the PPETmax NSTSn RUb subfields, a nominal packet padding value corresponding to the third spatial stream, and correspondingly, the constellation index corresponding to a third modulation scheme is greater than A2. In this case, the nominal packet padding value is 16 µs or 20 µs. Finally, the second device may determine a maximum nominal packet padding value corresponding to the first spatial stream to the third spatial stream as a nominal packet padding value that needs to be used, namely, 16 µs or 20 µs.

S1703: The second device determines, based on the nominal packet padding value, duration of a PE field included in the PPDU sent to the first device.

After determining the nominal packet padding value, the second device determines, based on the nominal packet padding value, the duration of the PE field included in the PPDU sent to the first device. The duration of the PE field enables the first device to have enough time to parse the PPDU received from the second device. For determining, by the second device, the duration of the PE field based on the nominal packet padding value, refer to related content in Table 1 and FIG. 3. Details are not described herein again.

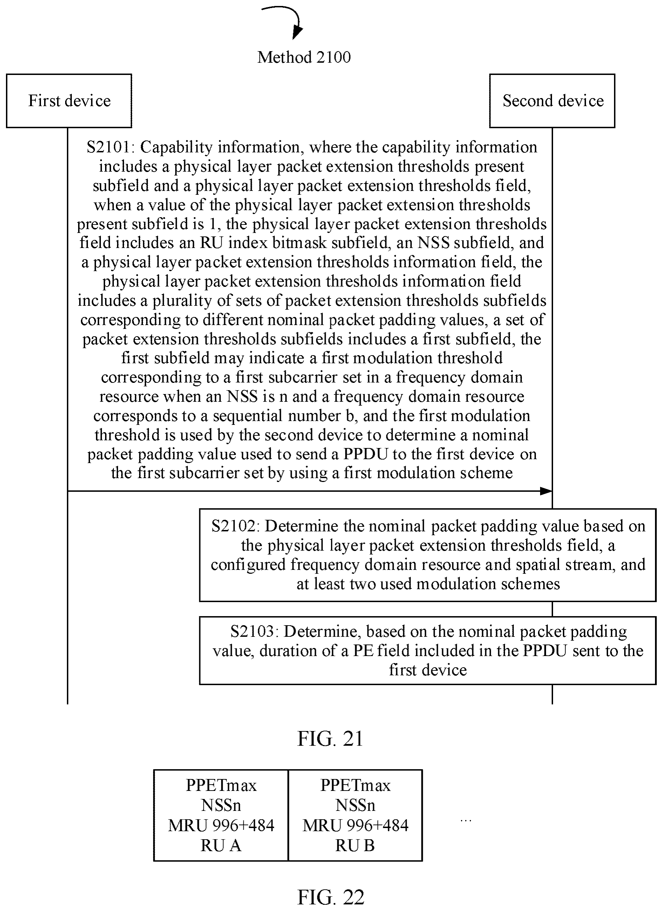

In some embodiments, the first device supports the second device in using the at least two modulation schemes on at least one RU/MRU. For example, an RU/MRU includes i subcarrier sets, and i is greater than or equal to 2. The second device uses the at least two modulation schemes on the i subcarrier sets. In this case, for each subcarrier set, a corresponding modulation threshold may be separately indicated, and the second device may determine, based on modulation thresholds respectively corresponding to all subcarrier sets, a nominal packet padding value that needs to be used. Correspondingly, FIG. 21 shows a fourth solution according to an embodiment of this application.

A method 2100 shown in FIG. 21 is applicable to the scenario shown in FIG. 1. For example, a first device may be the station 1 in FIG. 1, and a second device may be the AP in FIG. 1. In the method 2100, the first device indirectly indicates, based on a physical layer packet extension thresholds present subfield and a physical layer packet extension thresholds field in a PPDU, a nominal packet padding value that needs to be used by the second device to send a physical layer data packet to the first device by using at least two modulation schemes. The method 2100 includes the following steps.

S2101: The first device sends capability information to the second device, and correspondingly, the second device receives the capability information, where the capability information includes the physical layer packet extension thresholds field, the physical layer packet extension thresholds field includes an RU index bitmask subfield, an NSS subfield, and a physical layer packet extension thresholds information field, and the physical layer packet extension thresholds information field includes a plurality of sets of packet extension thresholds subfields corresponding to different nominal packet padding values. Each set of packet extension thresholds subfields includes a first subfield, the first subfield indicates a first modulation threshold corresponding to a first sub-carrier set in a frequency domain resource when an NSS is n and a frequency domain resource corresponds to a sequential number b, and the first modulation threshold is used by the second device to determine the nominal packet padding value used when sending the PPDU to the first device on the first subcarrier set by using a first modulation scheme.

Optionally, the capability information further includes the physical layer packet extension thresholds present subfield. When a value of the physical layer packet extension thresholds present subfield is 1, the physical layer packet extension thresholds information field includes a plurality of sets of packet extension thresholds subfields corresponding to different nominal packet padding values. Alternatively, when the physical layer packet extension thresholds information field includes a plurality of sets of packet extension thresholds subfields corresponding to different nominal packet padding values, a value of the physical layer packet extension thresholds present subfield is 1.

A difference between S2101 and S1701 lies in that each set of packet extension thresholds subfields may be extended based on subcarrier sets. For example, each set of packet extension thresholds subfields includes a plurality of subfields, and one subfield may indicate a modulation threshold corresponding to one subcarrier set in an RU/MRU when the NSS is n and the RU/MRU corresponds to a sequential number b. For example, a set of packet extension thresholds subfields includes a first subfield and a second subfield. The first subfield may indicate a first modulation threshold corresponding to a first subcarrier set in the RU/MRU when the NSS is n and the RU/MRU corresponds to the sequential number b, and the first modulation threshold is used by the second device to determine the corresponding nominal packet padding value used when sending the PPDU to the first device on the first subcarrier set by using the first modulation scheme. Similarly, the second subfield may indicate a second modulation threshold corresponding to a second subcarrier set in the RU/MRU when the NSS is n and the RU/MRU corresponds to the sequential number b, and the second modulation threshold is used by the second device to determine a corresponding nominal packet padding value used when sending the PPDU to the first device on the second subcarrier set by using the second modulation scheme.

PPETmax NSSn RUb subfields are used as an example. When the MRU used by the second device is 484+996, the MRU includes an RU A and an RU B. When 64QAM is used on the RU A and 16QAM is used on the RU B, a structure of the PPETmax NSSn RUb subfields may be shown in FIG. 22.

S2102: The second device determines the nominal packet padding value based on the physical layer packet extension thresholds field, a configured frequency domain resource and spatial stream, and the at least two used modulation schemes.

A nominal packet padding value corresponding to a subcarrier set may be determined based on a modulation threshold corresponding to an RU including the subcarrier set. For a specific determining manner, refer to content in Table 5 or Table 7. Details are not described herein again. In a possible implementation, a new RU allocation index may be introduced to indicate an RU including a subcarrier set. Alternatively, an RU allocation index defined in Table 6 may be reused, and indicate, together with an excess bit, an RU including a subcarrier set. The excess bit may be used to distinguish whether the indicated RU is the RU in Table 6 or the RU including the subcarrier set.

For i subcarrier sets included in the configured frequency domain resource, the second device may determine corresponding nominal packet padding values based on constellation indexes corresponding to modulation schemes respectively used on the i subcarrier sets and a modulation threshold corresponding to the space-time stream. After determining nominal packet padding values respectively corresponding to the i subcarrier sets, the second device determines, based on the nominal packet padding values respectively corresponding to the i subcarrier sets, the nominal packet padding value that needs to be used to send the PPDU to the first device. For example, the nominal packet padding value used by the second device is a maximum nominal packet padding value in the nominal packet padding values respectively used on the i subcarrier sets when the NSS is n and the RU corresponds to the sequential number b.

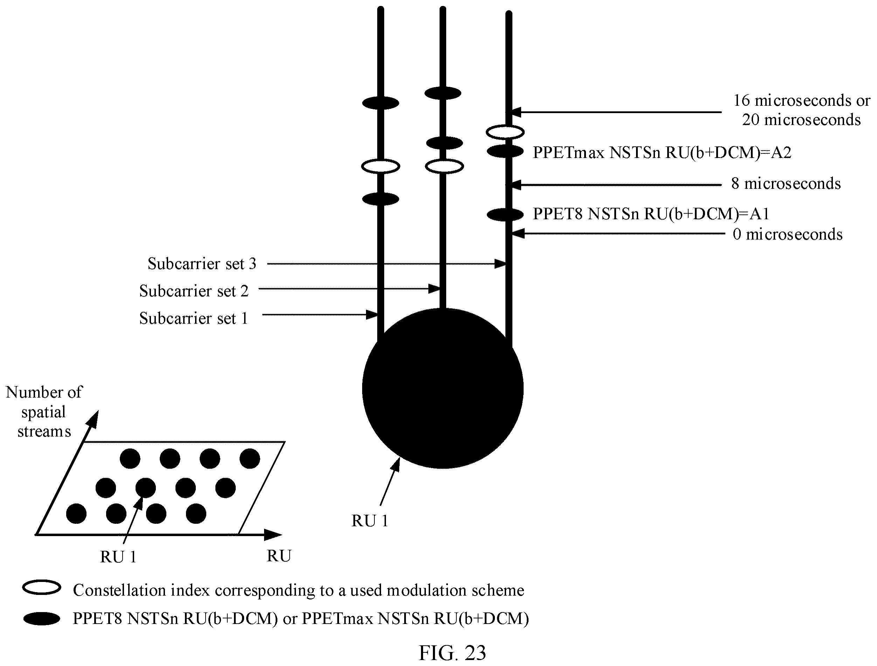

For ease of understanding, FIG. 23 shows a principle of determining a nominal packet padding value. One dot in FIG. 23 corresponds to one number of spatial streams and corresponds to one RU/MRU. In FIG. 23, an example in which the RU configured for the second device is an RU 1, the sequential number corresponding to the RU is b, and the RU 1 includes three subcarrier sets (namely, a subcarrier set 1 to a subcarrier set 3) is used.

The second device uses the first modulation scheme on the subcarrier set 1, uses the first modulation scheme on a subcarrier set 2, and uses the second modulation scheme on the subcarrier set 3. As shown in FIG. 23, the second device determines, based on a result of comparison between a constellation index corresponding to the first modulation scheme and a modulation threshold indicated by PPET8 NSTSn RUb subfields and between the constellation index corresponding to the first modulation scheme and a modulation threshold indicated by PPET16 NSTSn RUb subfields, a nominal packet padding value corresponding to the subcarrier set 1, and correspondingly, the constellation index corresponding to the first modulation scheme is greater than A1 and less than A2. In this case, the nominal packet padding value is 8 µs. The second device determines, based on a result of comparison between a constellation index corresponding to the second modulation scheme and the modulation threshold indicated by the PPET8 NSTSn RUb subfields and between the constellation index corresponding to the second modulation scheme and the modulation threshold indicated by the PPETmax NSTSn RUb subfields, a nominal packet padding value corresponding to the subcarrier set 2, and correspondingly, the constellation index corresponding to the first modulation scheme is less than A1. In this case, the nominal packet padding value is 0 µs. The second device determines, based on the result of comparison between the constellation index corresponding to the first modulation scheme and the modulation threshold indicated by the PPET8 NSTSn RUb subfields and between the constellation index corresponding to the first modulation scheme and the modulation threshold indicated by the PPETmax NSTSn RUb subfields, a nominal packet padding value corresponding to the subcarrier set 3, and correspondingly, the constellation index corresponding to the first modulation scheme is greater than A2. In this case, the nominal packet padding value is 16 µs or 20 µs. Finally, the second device may determine a maximum nominal packet padding value corresponding to the subcarrier set 1 to the subcarrier set 3 as a nominal packet padding value that needs to be used, namely, 16 µs or 20 µs.

S2103: The second device determines, based on the nominal packet padding value, duration of a PE field included in the PPDU sent to the first device.

After determining the nominal packet padding value, the second device determines, based on the nominal packet padding value, the duration of the PE field included in the PPDU sent to the first device. The duration of the PE field enables the first device to have enough time to parse the PPDU received from the second device. For determining, by the second device, the duration of the PE field based on the nominal packet padding value, refer to related content in Table 1 and FIG. 3. Details are not described herein again.

For a case in which the first device supports the second device in sending the PPDU to the first device by using a plurality of modulation schemes, the foregoing embodiments provide four solutions in total: the method 1200, the method 1300, the method 1700, and the method 2100. Based on any one of the four solutions, the first device may indicate, to the second device, the nominal packet padding value that should be used by the second device to send the PPDU to the first device by using the plurality of modulation schemes. The second device determines, based on the indication of the first device, the nominal packet padding value that needs to be used, to further determine the duration of the PE field included in the sent PPDU. The duration of the PE field enables the first device to have enough time to parse the PPDU received from the second device.

In embodiments of this application, "system" and "network" may be used interchangeably. "A plurality of" means two or more. In view of this, "a plurality of" may also be understood as "at least two" in embodiments of this application. "At least one" may be one or more, for example, at least one is one, two, or more. For example, including at least one means that one, two, or more are included, and which one or ones are included is not limited. For example, if at least one of A, B, and C is included, A, B, C, A and B, A and C, B and C, or A, B, and C may be included. Similarly, understandings of descriptions such as "at least one" are also similar. "At least one of the following items (pieces)" or a similar expression thereof refers to any combination of these items, including any combination of singular items (pieces) or plural items (pieces). For example, "at least one of A, B, and C" includes A, B, C, AB, AC, BC, or ABC. The term "and/or" describes an association relationship for describing associated objects and represents that three relationships may exist. For example, A and/or B may represent the following three cases: Only A exists, both A and B exist, and only B exists. In addition, the character "/", unless otherwise specified, usually indicates an "or" relationship between the associated objects.

Unless otherwise specified, ordinal numbers such as "first" and "second" mentioned in embodiments of this application are used to distinguish a plurality of objects, and are not used to limit a sequence, a time sequence, a priority, or an importance degree of the plurality of objects. In addition, descriptions of "first" and "second" do not mean that objects are necessarily different. For example, the first modulation scheme and the second modulation scheme indicate that there are two modulation schemes, and do not limit priorities or importance of the two modulation schemes.

In the foregoing embodiments provided in this application, the methods provided in embodiments of this application are described from a perspective of interaction between the first device and the second device. To implement functions in the foregoing methods provided in embodiments of this application, the first device and the second device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

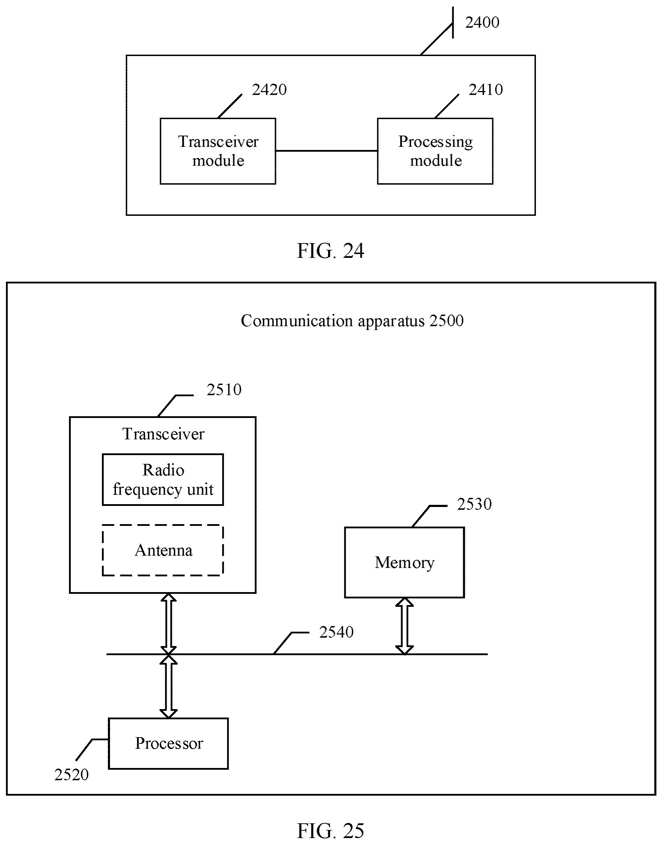

FIG. 24 is a block diagram of a communication apparatus 2400 according to an embodiment of this application. The communication apparatus 2400 may implement functions or steps implemented by the first device or the second device in the foregoing method embodiments. The communication apparatus 2400 may include functional units configured to perform the method performed by the first device or the second device in FIG. 12, FIG. 13, FIG. 17, or FIG. 21. For example, the communication apparatus 2400 may include a processing module 2410 and a transceiver module 2420. Optionally, a storage unit may be further included. The storage unit may be configured to store instructions (code or a program) and/or data. The processing module 2410 and the transceiver module 2420 may be coupled to the storage unit. For example, the processing module 2410 may read the instructions (the code or the program) and/or the data in the storage unit, to implement a corresponding method. The foregoing units may be independently disposed, or may be partially or completely integrated.

The processing module 2410 may be a processor or a controller, for example, may be a central processing unit (central processing unit, CPU), a digital signal processor (digital signal processor, DSP), an application-specific integrated circuit (application-specific integrated circuit, ASIC), a field programmable gate array (field programmable gate array, FPGA) or another programmable logic component, a transistor logic component, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The transceiver module 2420 is an interface circuit of the apparatus, and is configured to receive a signal from another apparatus. For example, when the apparatus is implemented in a manner of a chip, the transceiver module 2420 is an input/output interface, a pin, an interface circuit, or the like for exchanging a signal between the chip and another chip or apparatus.

In a possible design, when the communication apparatus 2400 implements the functions or steps implemented by the first device in the foregoing method embodiments, the communication apparatus 2400 may be the first device in the foregoing method embodiments, or may be a chip or a functional module configured to implement the functions of the first device in the foregoing method embodiments. The processing module 2410 is configured to perform a processing-related operation of the first device in the foregoing method embodiments, for example, generate capability information. The transceiver module 2420 is configured to perform receiving and sending-related operations of the first device in the foregoing method embodiments, for example, S1201, S1301, S1701, or S2101. A specific process in which each functional module included in the communication apparatus 2400 performs the foregoing corresponding steps is described in the foregoing method embodiments. Details are not described herein again.

In a possible design, when the communication apparatus 2400 implements the functions or steps implemented by the second device in the foregoing method embodiments, the communication apparatus 2400 may be the second device in the foregoing method embodiments, or may be a chip or a functional module configured to implement the functions of the second device in the foregoing method embodiments. The processing module 2410 is configured to perform processing-related operations of the second device in the foregoing method embodiments, for example, S1202 and S1203, S1302 and S1303, S1702 and S1703, or S2102 and S2103. The transceiver module 2420 is configured to perform receiving and sending-related operations of the second device in the foregoing method embodiments, for example, S1201, S1301, S1701, or S2101. A specific process in which each functional module included in the communication apparatus 2400 performs the foregoing corresponding steps is described in the foregoing method embodiments. Details are not described herein again.

FIG. 25 shows a communication apparatus 2500 according to an embodiment of this application. The communication apparatus 2500 may be an AP or a STA, and can implement functions of the first device or the second device in the methods provided in embodiments of this application. Alternatively, the communication apparatus 2500 may be an apparatus that can support the first device in implementing a corresponding function in the methods provided in embodiments of this application, or an apparatus that can support the second device in implementing a corresponding function in the methods provided in embodiments of this application. The communication apparatus 2500 may be a chip or a chip system. In this embodiment of this application, the chip system may include a chip, or may include a chip and another discrete component.

The communication apparatus 2500 includes at least one processor 2520, configured to implement or support the communication apparatus 2500 in implementing functions of the first device or the second device in the methods provided in embodiments of this application, for example, determining the foregoing capability information or determining a nominal packet padding value. The communication apparatus 2500 may further include at least one memory 2530, configured to store program instructions and/or data. The memory 2530 is coupled to the processor 2520. The coupling in this embodiment of this application may be an indirect coupling or a communication connection between apparatuses, units, or modules in an electrical form, a mechanical form, or another form, and is used for information exchange between the apparatuses, the units, or the modules. The processor 2520 may operate with the memory 2530. The processor 2520 may execute the program instructions and/or the data stored in the memory 2530, so that the communication apparatus 2500 implements the corresponding method. At least one of the at least one memory may be located in the processor.

The communication apparatus 2500 may further include a transceiver 2510, configured to communicate with another device through a transmission medium, so that an apparatus used in the communication apparatus 2500 can communicate with the another device. For example, when the communication apparatus is an AP, the another device is a STA; or when the communication apparatus is a STA, the another device is an AP. The processor 2520 may send or receive data through the transceiver 2510. The transceiver 2510 may be referred to as a transceiver device, a transceiver circuit, an input/output interface, or the like, and is configured to implement a transceiver function of the communication apparatus 2500 through an antenna. The transceiver 2510 may further include a radio frequency unit. The radio frequency unit may be independent of the communication apparatus 2500, or may be integrated into the communication apparatus 2500. Certainly, the transceiver 2510 may further include an antenna, for example, a remote antenna independent of the communication apparatus 2500, or an antenna integrated into the communication apparatus 2500. In hardware implementation, the transceiver module 2420 may be the transceiver 2510.

A specific connection medium between the transceiver 2510, the processor 2520, and the memory 2530 is not limited in embodiments of this application. In embodiments of this application, the memory 2530, the processor 2520, and the transceiver 2510 are connected through a bus 2540 in FIG. 25. The bus is represented by using a bold line in FIG. 25. A manner of connection between other components is merely an example for description, and is not limited thereto. The bus may be classified into an address bus, a data bus, a control bus, and the like. For ease of representation, only one bold line is used for representation in FIG. 25, but this does not mean that there is only one bus or only one type of bus.

In embodiments of this application, the processor 2520 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory 2530 may be a non-volatile memory like a hard disk drive (hard disk drive, HDD) or a solid-state drive (solid-state drive, SSD), or may be a volatile memory (volatile memory) like a random access memory (random access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

It should be noted that the communication apparatus in the foregoing embodiments may be an AP, a STA, a circuit, a chip used in an AP or a STA, or another combined component, component, or the like that has a function of the AP or the STA. As a possible product form, the AP or the STA described in embodiments of this application may further be implemented by using the following components: one or more FPGAs, a PLD, a controller, a state machine, gate logic, a discrete hardware component, any other suitable circuit, or any combination of circuits that can perform various functions described in this application.

The first device in embodiments of this application may be an AP or a STA. The second device may be an AP or a STA. It should be understood that the APs in various product forms have any function of the AP in the foregoing method embodiments. Details are not described herein again. The STAs in various forms have any function of the STA in the foregoing method embodiments. Details are not described herein again.

An embodiment of this application further provides a communication system. Specifically, the communication system includes a second device and a first device, or may further include more first devices and second devices. For example, the communication system includes the second device and the first device that are configured to implement related functions in FIG. 12, FIG. 13, FIG. 17, or FIG. 21.

An embodiment of this application further provides a computer-readable storage medium, including instructions. When the instructions are run on a computer, the computer is enabled to perform the method performed by the first device or the second device in FIG. 12, FIG. 13, FIG. 17, or FIG. 21.

An embodiment of this application further provides a computer program product, including computer program code. When the computer program code is run on a computer, the computer is enabled to perform the method performed by the first device or the second device in FIG. 12, FIG. 13, FIG. 17, or FIG. 21.

An embodiment of this application provides a chip system. The chip system includes a processor, may further include a memory, and is configured to implement the functions of the first device or the second device in the foregoing methods. The chip system may include a chip, or may include a chip and another discrete component.

An embodiment of this application further provides a communication apparatus, including a processor and an interface. The processor is configured to perform the foregoing one or more method embodiments. Alternatively, the processor is configured to perform the capability indication method or the capability determining method in the foregoing one or more method embodiments.

It should be understood that the communication apparatus may be a chip. The processor may be implemented by hardware, or may be implemented by software. When the processor is implemented by the hardware, the processor may be a logic circuit, an integrated circuit, or the like. When the processor is implemented by the software, the processor may be a general-purpose processor. The general-purpose processor is implemented by reading software code stored in a memory. The memory may be integrated into the processor, or may be located outside the processor and exist independently.

All or some of the methods in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device (for example, a server or a data center) that integrates one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A capability indication method in a wireless local area network, comprising:
determining, by a first device, capability information, and sending, by the first device, the capability information to a second device, wherein
the capability information comprises a nominal packet padding subfield, the nominal packet padding subfield indicates a corresponding nominal packet padding value used when the second device sends a physical layer protocol data unit PPDU to the first device, to enable the second device to determine, based on the nominal packet padding value, duration of a packet extension PE field comprised in the PPDU, and the nominal packet padding value is for all numbers of spatial streams NSSs and all RU allocations that the first device supports and for at least two modulation schemes used by the second device on a configured frequency domain resource or a configured spatial stream.

2. A capability determining method in a wireless local area network, comprising:
receiving, by a second device, capability information from a first device, wherein the capability information comprises a nominal packet padding subfield, the nominal packet padding subfield indicates a corresponding nominal packet padding value used when the second device sends a physical layer protocol data unit PPDU to the first device, and the nominal packet padding value is for all numbers of spatial streams NSSs and all RU allocations that the first device supports and for at least two modulation schemes used by the second device on a configured frequency domain resource or a configured spatial stream;
determining, by the second device, the nominal packet padding value based on the configured frequency domain resource and spatial stream and the at least two used modulation schemes; and
determining, by the second device based on the nominal packet padding value, duration of a packet extension PE field comprised in the PPDU, wherein the duration of the PE field enables the first device to have enough time to parse the PPDU received from the second device.

3. The method according to claim 1 or 2, wherein the capability information further comprises a physical layer packet extension thresholds present subfield, and a value of the physical layer packet extension thresholds present subfield is 0.

4. The method according to claim 2, wherein determining, by the second device, the nominal packet padding value based on the configured frequency domain resource and spatial stream and the at least two used modulation schemes comprises:
determining, by the second device, the nominal packet padding value based on a configured number of spatial streams, the configured frequency domain resource, and a highest-order modulation scheme in the at least two modulation schemes.

5. The method according to any one of claims 1 to 4, wherein
a status value of the nominal packet padding subfield is 0, and the nominal packet padding value is 8 microseconds;
a status value of the nominal packet padding subfield is 1, and the nominal packet padding value is 16 microseconds;
a status value of the nominal packet padding subfield is 2, and the nominal packet padding value is 20 microseconds; or
a status value of the nominal packet padding subfield is 3, the second device sends the PPDU to the first device by using the at least two modulation schemes, and the nominal packet padding value is 20 microseconds.

6. The method according to any one of claims 1 to 4, wherein a status value of the nominal packet padding subfield is 3, a constellation index corresponding to the highest-order modulation scheme in the at least two modulation schemes is less than or equal to a constellation index threshold, and one or more of the following conditions are met, the nominal packet padding value is 16 microseconds; otherwise, the nominal packet padding value is 20 microseconds:
a resource unit RU/multi-resource unit MRU allocation size is less than or equal to a size threshold, a size of an RU or an MRU corresponding to the highest-order modulation scheme is less than or equal to a size threshold, or a number of space-time streams NSS is less than or equal to a number of spatial streams threshold.

7. The method according to claim 6, wherein the constellation index threshold is 5, the size threshold is 2×996-tone, and the number of spatial streams threshold is 8 or 16.

8. A capability indication method in a wireless local area network, comprising:
determining, by a first device, capability information, and sending, by the first device, the capability information to a second device, wherein
the capability information comprises a physical layer packet extension thresholds field, the physical layer packet extension thresholds field comprises a resource unit RU index bitmask subfield, a number of space-time streams NSS subfield, and a physical layer packet extension thresholds information field, the physical layer packet extension thresholds information field comprises a plurality of sets of packet extension thresholds subfields corresponding to different nominal packet padding values, each set of packet extension thresholds subfields indicates a modulation threshold corresponding to an NSS being n and an RU/MRU corresponding to a sequential number b, the modulation threshold is used by the second device to determine a nominal packet padding value used to send a physical layer protocol data unit PPDU to the first device, and the nominal packet padding value is for the first device supporting the second device in using at least two modulation schemes when the configured NSS is n and the RU/MRU corresponds to the sequential number b, wherein a value range of n is a subset of [N1, ..., N2], both N1 and N2 are integers greater than or equal to 1, a value range of b is a subset of [M1, ..., M2], and M1 and M2 are integers greater than or equal to 0.

9. A capability determining method in a wireless local area network, comprising:
receiving, by a second device, capability information sent by a first device, wherein the capability information comprises a physical layer packet extension thresholds field, the physical layer packet extension thresholds field comprises a resource unit RU index bitmask subfield, a number of space-time streams NSS subfield, and a physical layer packet extension thresholds information field, the physical layer packet extension thresholds information field comprises a plurality of sets of packet extension thresholds subfields corresponding to different nominal packet padding values, each set of packet extension thresholds subfields indicates a modulation threshold corresponding to an NSS being n and an RU/MRU corresponding to a sequential number b, the modulation threshold is used by the second device to determine a nominal packet padding value used to send a physical layer protocol data unit PPDU to the first device, and the nominal packet padding value is for the first device supporting the second device in using at least two modulation schemes when the configured NSS is n and the RU/MRU corresponds to the sequential number b, wherein a value range of n is a subset of [N1, ..., N2], both N1 and N2 are integers greater than or equal to 1, a value range of b is a subset of [M1, ..., M2], and both M1 and M2 are integers greater than or equal to 0;
determining, by the second device, the nominal packet padding value based on a configured frequency domain resource and spatial stream and the at least two used modulation schemes; and
determining, by the second device based on the nominal packet padding value, duration of a packet extension PE field comprised in the PPDU, wherein the duration of the PE field enables the first device to have enough time to parse the PPDU received from the second device.

10. The method according to claim 8 or 9, wherein the capability information further comprises a physical layer packet extension thresholds present subfield, and a value of the physical layer packet extension thresholds present subfield is 1.

11. The method according to any one of claims 8 to 10, wherein each set of packet extension thresholds subfields meets one or more of the following:
a nominal packet padding value corresponding to the at least two modulation schemes is a nominal packet padding value corresponding to a second modulation scheme, a constellation index corresponding to the second modulation scheme is a sum of a constellation index corresponding to a highest-order modulation scheme in the at least two modulation schemes and a first value, and the first value is not equal to 0;
a modulation threshold corresponding to the NSS being n and the RU corresponding to the sequential number b is a modulation threshold corresponding to the NSS being n and the RU corresponding to the sequential number b', b' is a sum of b and a second value, and the second value is not equal to 0;
a modulation threshold corresponding to the NSS being n and the RU corresponding to the sequential number b is a modulation threshold corresponding to the NSS being n' and the RU corresponding to the sequential number b, n' is a sum of n and a third value, and the third value is not equal to 0; or
a modulation threshold corresponding to the NSS being n and the RU corresponding to the sequential number b corresponds to a nominal packet padding value of 20 microseconds.

12. A communication apparatus, comprising:
a processing module, configured to determine capability information, wherein the capability information comprises a nominal packet padding subfield, the nominal packet padding subfield indicates a corresponding nominal packet padding value used when the second device sends a physical layer protocol data unit PPDU to the communication apparatus, to enable the second device to determine, based on the nominal packet padding value, duration of a packet extension PE field comprised in the PPDU, and the nominal packet padding value is for all numbers of spatial streams NSSs and all RU allocations that the communication apparatus supports and for at least two modulation schemes used by the second device on a configured frequency domain resource or a configured spatial stream; and
a transceiver module, configured to send the capability information to the second device.

13. A communication apparatus, comprising:
a transceiver module, configured to receive capability information from a first device, wherein the capability information comprises a nominal packet padding subfield, the nominal packet padding subfield indicates a corresponding nominal packet padding value used when the communication apparatus sends a physical layer protocol data unit PPDU to the first device, and the nominal packet padding value is for all numbers of spatial streams NSSs and all RU allocations that the first device supports and for at least two modulation schemes used by the communication apparatus on a configured frequency domain resource or a configured spatial stream; and
a processing module, configured to: determine the nominal packet padding value based on the configured frequency domain resource and spatial stream and the at least two used modulation schemes, and determine, based on the nominal packet padding value, duration of a packet extension PE field comprised in the PPDU, wherein the duration of the PE field enables the first device to have enough time to parse the PPDU received from the communication apparatus.

14. The apparatus according to claim 12 or 13, wherein the capability information further comprises a physical layer packet extension thresholds present subfield, and a value of the physical layer packet extension thresholds present subfield is 0.

15. The apparatus according to claim 13, wherein the processing module is specifically configured to:
determine the nominal packet padding value based on a configured number of spatial streams, the configured frequency domain resource, and a highest-order modulation scheme in the at least two modulation schemes.

16. The apparatus according to any one of claims 12 to 15, wherein a status value of the nominal packet padding subfield is 0, and the nominal packet padding value is 8 microseconds;
a status value of the nominal packet padding subfield is 1, and the nominal packet padding value is 16 microseconds;
a status value of the nominal packet padding subfield is 2, and the nominal packet padding value is 20 microseconds; or
a status value of the nominal packet padding subfield is 3, the second device sends the PPDU to the first device by using the at least two modulation schemes, and the nominal packet padding value is 20 microseconds.

17. The apparatus according to any one of claims 12 to 15, wherein when a status value of the nominal packet padding subfield is 3, a constellation index corresponding to the highest-order modulation scheme in the at least two modulation schemes is less than or equal to a constellation index threshold, and one or more of the following conditions are met, the nominal packet padding value is 16 microseconds; otherwise, the nominal packet padding value is 20 microseconds:
a resource unit RU/multi-resource unit MRU allocation size is less than or equal to a size threshold, a size of an RU or an MRU corresponding to the highest-order modulation scheme is less than or equal to a size threshold, or a number of space-time streams NSS is less than or equal to a number of spatial streams threshold.

18. The apparatus according to claim 17, wherein the constellation index threshold is 5, the size threshold is 2×996-tone, and the number of spatial streams threshold is 8 or 16.

19. A communication apparatus, comprising:
a processing module, configured to determine capability information, wherein the capability information comprises a physical layer packet extension thresholds field, the physical layer packet extension thresholds field comprises a resource unit RU index bitmask subfield, a number of space-time streams NSS subfield, and a physical layer packet extension thresholds information field, the physical layer packet extension thresholds information field comprises a plurality of sets of packet extension thresholds subfields corresponding to different nominal packet padding values, each set of packet extension thresholds subfields indicates a modulation threshold corresponding to an NSS being n and an RU/MRU corresponding to a sequential number b, the modulation threshold is used by the second device to determine a nominal packet padding value used to send a physical layer protocol data unit PPDU to the communication apparatus, and the nominal packet padding value is for the communication apparatus supporting the second device in using at least two modulation schemes when the configured NSS is n and the RU/MRU corresponds to the sequential number b, wherein a value range of n is a subset of [N1, ..., N2], both N1 and N2 are integers greater than or equal to 1, a value range of b is a subset of [M1, ..., M2], and M1 and M2 are integers greater than or equal to 0; and
a transceiver module, configured to send the capability information to the second device.

20. A communication apparatus, comprising:
a transceiver module, configured to receive capability information sent by a first device, wherein the capability information comprises a physical layer packet extension thresholds field, the physical layer packet extension thresholds field comprises a resource unit RU index bitmask subfield, a number of space-time streams NSS subfield, and a physical layer packet extension thresholds information field, the physical layer packet extension thresholds information field comprises a plurality of sets of packet extension thresholds subfields corresponding to different nominal packet padding values, each set of packet extension thresholds subfields indicates a modulation threshold corresponding to an NSS being n and an RU/MRU corresponding to a sequential number b, the modulation threshold is used by the communication apparatus to determine a nominal packet padding value used to send a physical layer protocol data unit PPDU to the first device, and the nominal packet padding value is for the first device supporting the communication apparatus in using at least two modulation schemes when the configured NSS is n and the RU/MRU corresponds to the sequential number b, wherein a value range of n is a subset of [N1, ..., N2], both N1 and N2 are integers greater than or equal to 1, a value range of b is a subset of [M1, ..., M2], and both M1 and M2 are integers greater than or equal to 0; and
a processing module, configured to: determine the nominal packet padding value based on the configured frequency domain resource and spatial stream and the at least two used modulation schemes, and determine, based on the nominal packet padding value, duration of a packet extension PE field comprised in the PPDU, wherein the duration of the PE field enables the first device to have enough time to parse the PPDU received from the communication apparatus.

21. The apparatus according to claim 19 or 20, wherein the capability information further comprises a physical layer packet extension thresholds present subfield, and a value of the physical layer packet extension thresholds present subfield is 1.

22. The apparatus according to any one of claims 19 to 21, wherein each set of packet extension thresholds subfields meets one or more of the following:
a nominal packet padding value corresponding to the at least two modulation schemes is a nominal packet padding value corresponding to a second modulation scheme, a constellation index corresponding to the second modulation scheme is a sum of a constellation index corresponding to a highest-order modulation scheme in the at least two modulation schemes and a first value, and the first value is not equal to 0;
a modulation threshold corresponding to the NSS being n and the RU corresponding to the sequential number b is a modulation threshold corresponding to the NSS being n and the RU corresponding to the sequential number b', b' is a sum of b and a second value, and the second value is not equal to 0;
a modulation threshold corresponding to the NSS being n and the RU corresponding to the sequential number b is a modulation threshold corresponding to the NSS being n' and the RU corresponding to the sequential number b, n' is a sum of n and a third value, and the third value is not equal to 0; or
a modulation threshold corresponding to the NSS being n and the RU corresponding to the sequential number b corresponds to a nominal packet padding value of 20 microseconds.

23. A chip, wherein the chip comprises at least one processor and an interface, the processor is configured to read and execute instructions stored in a memory, and when the instructions are run, the chip is enabled to perform the method according to any one of claims 1 to 11.

24. A computer-readable storage medium, wherein the computer-readable storage medium stores a computer program, the computer program comprises program instructions, and when the program instructions are executed by a computer, the computer is enabled to perform the method according to any one of claims 1 to 11.

25. A computer program product, wherein the computer program product comprises a computer program, and when the computer program is run on a computer, the computer is enabled to perform the method according to any one of claims 1 to 11.
